# EUROPEAN PATENT APPLICATION

(11) **EP 2 570 564 A2**
(43) Date of publication of application: **20.03.2013**
(21) Application number: 11188874.9
(22) Date of filing: 11.11.2011
(51) Int. Cl.: E04F 15/02, B27M 3/00, B27M 3/04, F16B 5/00, B27F 1/02

(54) **An apparatus and a method for assembling panels and locking elements**

(30) Priority: 16.09.2011 EP 11007573
(71) Applicant: Spanolux N.V. Div. Balterio, 8710 Sint-Baafs-Vijve (BE)
(72) Inventor: Vermeulen, Bruno Paul Louis, 3680 Aldeneik-Maaseik (BE)
(74) Representative: De Vries & Metman

(57) **Abstract**

An apparatus (8) for assembling panels and locking elements, comprises a feeding station (9) for supplying a panel (1), a machining station (10) for making a recess into a panel, an inserting station (11) for inserting a locking element into a recess of a panel, a discharge station (12) for discharging the assembled panel, at least three movable engaging members, each suitable for engaging and conveying a pane, which engaging members are adapted such that a first panel can be conveyed from the feeding station (9) to the machining station (10), a second panel can be conveyed from the machining station (10) to the inserting station (11), and a third panel can be conveyed from the inserting station (11) to the discharge station (12) simultaneously during subsequent finite time periods. A method of assembling panels and locking elements, comprises the subsequent steps of simultaneously machining a recess into a first panel at a machining station and inserting a locking element into a recess of a second panel at an inserting station, simultaneously supplying a third panel to the machining station, conveying the first panel from the machining station to the inserting station and conveying the second panel from the inserting station to a discharge station for discharging the assembled second panel; and simultaneously machining a recess into the third panel at the machining station and inserting a locking element into the recess of the first panel at the inserting station.

## Description

The present invention relates to an apparatus for assembling panels and locking elements.

Panels, in particular floor panels, may be joined to each other along their edges in several ways to form a flooring. There is a growing development in locking systems. One of the locking systems comprises a separate locking element which is inserted into a recess at a panel edge. Such a locking system is disclosed in the international patent application WO 2011/127981 of the same applicant as the present application. Therefore, that application is incorporated herein by reference thereto.

It is an object of the present invention to provide an apparatus for assembling panels and locking elements at high speed.

This is achieved by the apparatus according to the invention as defined in claim 1.

Due to simultaneously conveying three separate panels, during the period between subsequent finite time periods a recess in a fresh panel can be machined at the same time as inserting a locking element into the recess of a panel which is provided with a recess at the machining station. The apparatus according to the invention provides the opportunity to assemble the panel and locking element in a more or less continuous way. Each step of the movable engaging members can take a fresh panel from the feed station and discharge an assembled panel to the discharge station. The term simultaneously during subsequent finite time periods means that the three engaging members are displaced simultaneously in a discontinuous manner.

It is also possible that the engaging members are adapted such that a first panel can be engaged at the feeding station, conveyed from the feeding station to the machining station and disengaged at the machining station, a second panel can be engaged at the machining station, conveyed from the machining station to the inserting station and disengaged at the inserting station, and a third panel can be engaged at the inserting station, conveyed from the inserting station to the discharge station and disengaged at the discharge station simultaneously during subsequent finite time periods. This means that each engaging member only displaces a panel between two neighbouring stations.

Preferably, the mutual distance of the feeding station, the machining station, the inserting station and the discharge station is relatively small since this minimizes the lengths of travelling paths of the engaging members and thus provides the opportunity to run the apparatus at still a higher speed.

The invention is also related to an apparatus according to claim 9. The advantage of the apparatus is that within a continuous process of feeding panels, the panels can be discontinuously processed at different processing stations which leads to a reliable and fast manufacturing process. In this case the indexing system can take a panel from the magazine or feeding station to a treatment station and another panel from the treating station to the discharge station. The panel at the treatment station stays there during a pre-determined period of time in which it may be treated, for example machining, coating or the like. It is also possible that the apparatus is suitable for assembling panels and locking elements.

The invention is also related to a method of assembling panels and locking elements, comprising the steps of supplying panels in a substantially continuous manner to a magazine for temporarily taking up the panels, and feeding the panels from or by the magazine in a discontinuous manner to subsequent processing stations where the panels are machined and supplied with locking elements and discharged to a discharge conveyor.

It is noted that the recess and/or the locking element are made such that the locking element clamps in the panel. This prevents the locking element from falling out of the panel upon handling the panel after assembly. For example, the panel and/or the locking element may be provided with one or more friction members for mutual engagement. Such friction members at the panel may be formed at the machining station or at another processing station, but it may also be formed on the locking element upon manufacturing this, independently from the apparatus as described hereinbefore. Therefore, the invention is also related to a floor panel including a flexible locking element, which is clamped in a side edge of the panel, and to a locking element having a friction member.

The invention will hereafter be elucidated with reference to the very schematic drawings showing an embodiment of the invention by way of example.

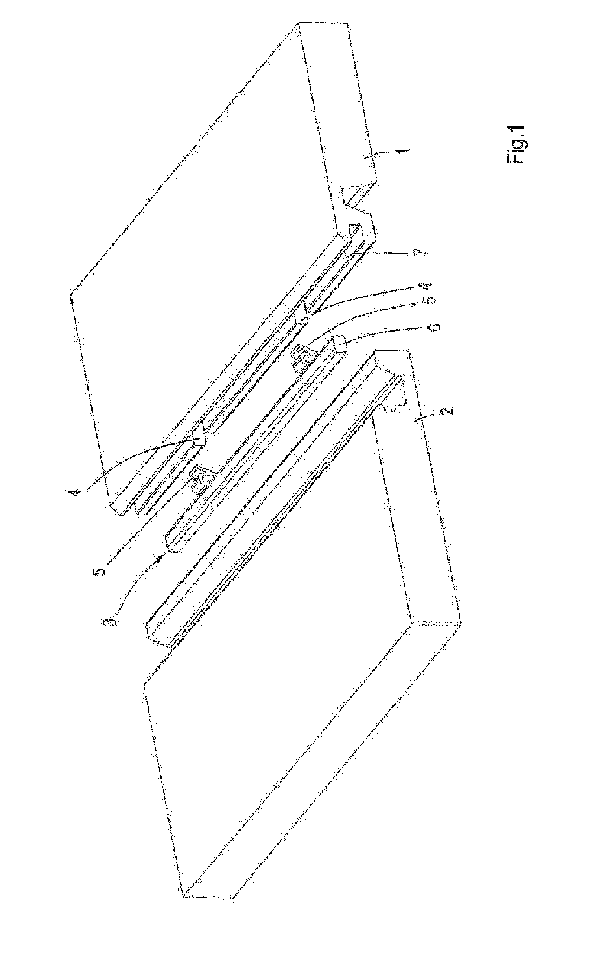

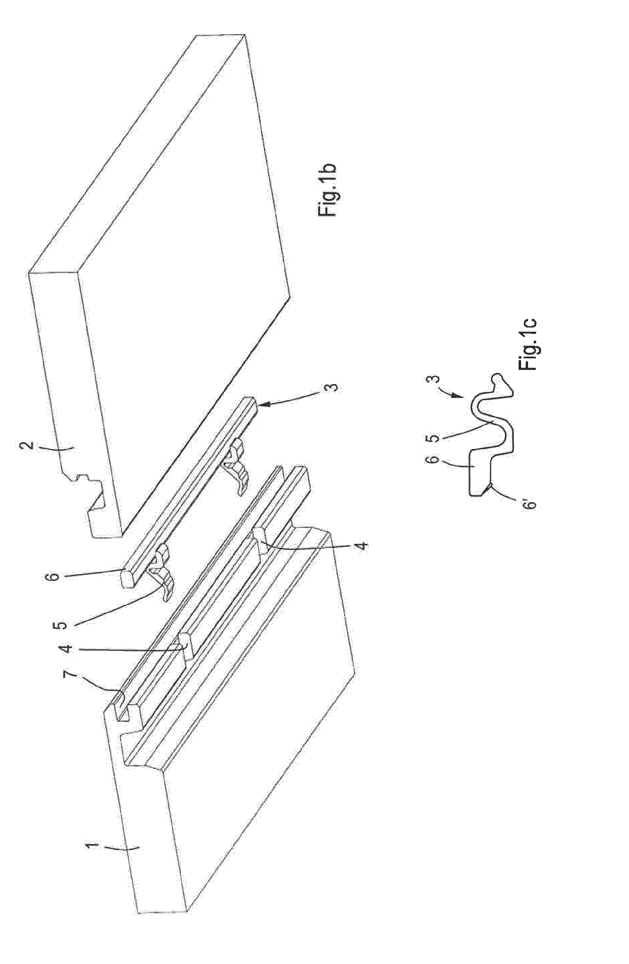

Fig. 1 is a perspective top view of a part of two panel edges including a separate locking element.
Fig. 1b is a perspective bottom view of a part of two panel edges including an alternative separate locking element.
Fig. 1 is a cross-sectional view of an alternative embodiment of a locking element.
Fig. 2 is a front view of an embodiment of an apparatus according to the invention.
Fig. 3 is a similar view as Fig. 2 of an alternative embodiment at a different scale.
Fig. 4 is a cross-sectional view of a part of the inserting station of an embodiment of the apparatus according to the invention.
Fig. 5 is a plan view of a blank including a series of locking elements.
Fig. 6 is a side view of an alternative embodiment of an apparatus according to the invention.
Figs. 7a-7s are frontal views and Figs. 7a'-7s' are plan views of another embodiment of the apparatus according to the invention.
Figs. 8a-8s and Figs. 8aʹ-8sʹ are similar views as Figs. 7a-7s and Figs. 7a'-7s', respectively, but showing an alternative embodiment.

The apparatus according to the present invention as shown in the drawings is suitable for assembling a panel and a separate locking element. A separate locking element is used in certain locking systems for joining panels. An advantageous locking system including a separate locking element is disclosed in the international patent application WO 2011/127981 of the same applicant as in the present application, Figs. 1 and 1b show examples of two panels 1, 2 which are provided with such a locking system. The panel 1 has an edge which is prepared for receiving a locking element 3. The edge has two recesses 4 for receiving protruding portions 5 of the locking element 3. The locking element 3 further comprises a tongue 6 which fits in a groove 7 of the panel 1. The tongue 6 as shown is elongated and the protruding portions 5, which are flexible in this case, project from the tongue 6 in transverse direction.

As shown in Fig. 1c, the tongue 6 is provided with a small friction cam 6' near its side facing away from the protruding portions 5 and protruding slightly to the lower side of the tongue 6. The position of the cams 6' is such that when the tongue is inserted into the groove, the cams 6' just engage the wall of the groove 7 of the panel 1 so as to hold the tongue 6 and therewith the whole locking element 3 with respect to the panel and prevent it from falling out during handling of the panel 1. Because each cam 6' is provided near the tip of the tongue, it leaves the groove 7 quickly after the locking element 3 starts moving through the groove 7 upon assembly of two panels 1, 2 during laying of a floor. Thus, it does not or almost not hinder movement of the tongue 6 in the groove 7.

Panels 1, 2 as shown in Figs. 1 and 1b are manufactured at high production speed. The panels 1, 2 are sawn out of a large panel and provided with tongues and grooves at milling stations. Generally, such a process occurs continuously, which means that treatment of the panels is performed during transporting the panels 1, 2. The apparatus according to the invention is suitable to make the recesses 4 and to insert the locking element 3 in a high speed process, but with stand still interruptions.

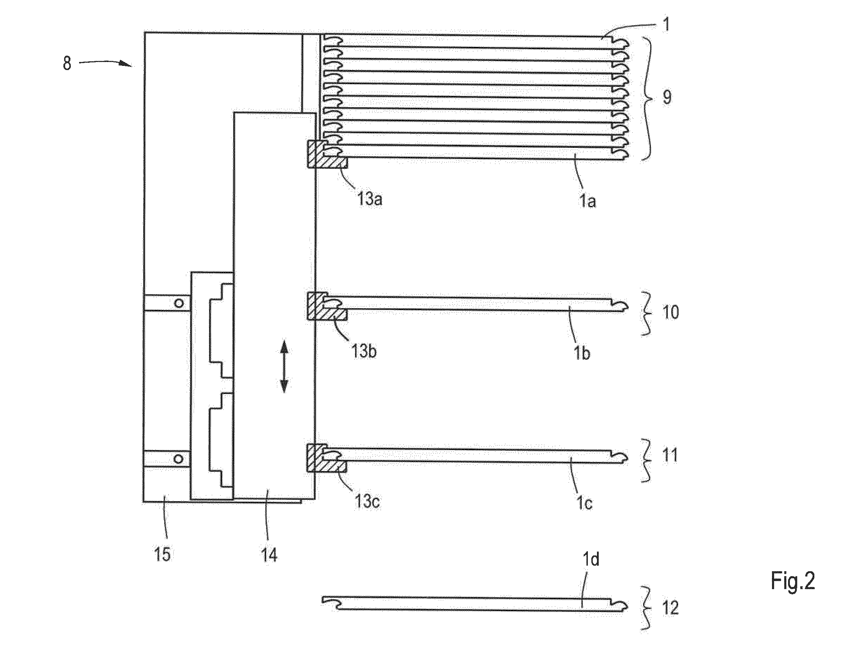

Fig. 2 shows an embodiment of the apparatus 8 for assembling panels and locking elements 3 according to the invention. The apparatus 8 comprises a feeding station 9 for supplying panels 1. The apparatus 8 can also be provided with a feeding conveyor (not shown in Fig. 2) for substantially continuously supplying panels 1 to a magazine at the feeding station 9. Fig. 2 shows that the feeding station 9 has a magazine which is configured to receive a stack of laying panels 1. The magazine may be configured to receive the panels in a different manner, such as in a radial position relative to each other. The panels 1 may be provided with edge profiles, such as integral tongues and grooves, which are machined in a preceding manufacturing step.

Fig. 2 further indicates a machining station 10 where recesses 4 are made into a side edge of the panel 1b that is present at the machining station 10. The machining station 10 is not shown in detail in Fig. 2, but it may comprise a drilling unit or a milling cutter, or the like.

The apparatus 8 further comprises an inserting station 11 where the locking element 3 including the protruding portions 5 are inserted into the recesses 4 of the panel 1c that is actually present at the inserting station 11.

It is noted that in the embodiment as shown in Fig. 2 the recesses 4 are provided in the side of the panels 1 which is viewed in Fig. 2.

The apparatus 8 is provided with a discharge station 12 to which the panels 1 in assembled condition are transported. In a next step the assembled panels can be finished further or packaged and/or transported by a discharge conveyor.

It is noted that the machining station 10, the inserting station 11 and the discharge station 12 together may be defined in general as processing stations. Although three processing stations are shown in Fig. 2, it is still possible to have two or more than three processing stations. For example, there may be a single treating station for treating panels instead of the machining station 10 and the inserting station 11.

It is noted that the panels 1 are transported continuously to the magazine, but taken from the magazine at the feeding station 9 in a substantially discontinuous manner to the processing stations 10, 11 and 12.

The embodiment of the apparatus 8 as shown in Fig. 2 comprises three engaging members 13 . The engaging members 13 are mounted to a common frame 14 which is movable in vertical direction with respect to a base 15 as indicated by the doubleheaded arrow. The mutual distances of the engaging members 13 correspond to the locations of the feeding station 9, the machining station 10, the inserting station 11 and the discharge station 12. These stations 9-12 have a fixed position with respect to the base 15. This means, for example, that each of the panels 1 is stopped at the machining station 10 so as to be provided with recesses 4 and at the inserting station 11 so as to be provided with a locking element 3. It is advantageous to perform such processing steps simultaneously. In spite of these discontinuous processing steps within a continuous process of manufacturing panels, the simultaneous treatments and simultaneous conveyance of the panels 1 along the processing stations provide the opportunity of a high production speed.

Each of the engaging members 13 can engage at least one panel 1. In the situation as shown in Fig. 2 the common frame 14 including the engaging members 13 is located such that the upper engaging member 13a holds a fresh panel 1a at the feeding station 9, the middle engaging member 13b holds a panel 1b at the machining station 10 where the recesses 4 have been made, and the lower engaging member 13c holds a panel 1 at the inserting station 11 where the locking element 3 has been inserted into the panel 1. In the shown condition the apparatus 8 is ready to move the engaged panels downwardly, such that the fresh panel 1a is displaced to the machining station 10, the panel 1b including the recesses 4 is displaced to the inserting station 11 and the assembled panel 1c is displaced to the discharge station 12. The engaging members 13a-13c are displaced simultaneously during a predetermined finite time period. After this step of transporting the panels 1a, 1b and 1c downwardly the panel 1c can be transported to a next apparatus, for example. When the panel 1a has arrived at the machining station 10 the recesses 4 can be machined. At the same time the panel 1b has arrived at the inserting station 11 where a locking element 3 can be inserted into the panel 1b.

At least partly during machining the recesses 4 in the panel 1a and inserting the locking element 3 into the panel 1b the engaging members 13 are disengaged from the panels 1 and are again displaced upwardly to pick up a fresh panel 1 from the feeding station 9, to engage the panel 1 including the recesses 4 at the machining station 10 and to engage the assembled panel 1 at the inserting station 11. This means that the steps of disengaging, moving upwardly and engaging of the engaging members occur between the finite time periods of simultaneously transporting the panels 1 downwardly.

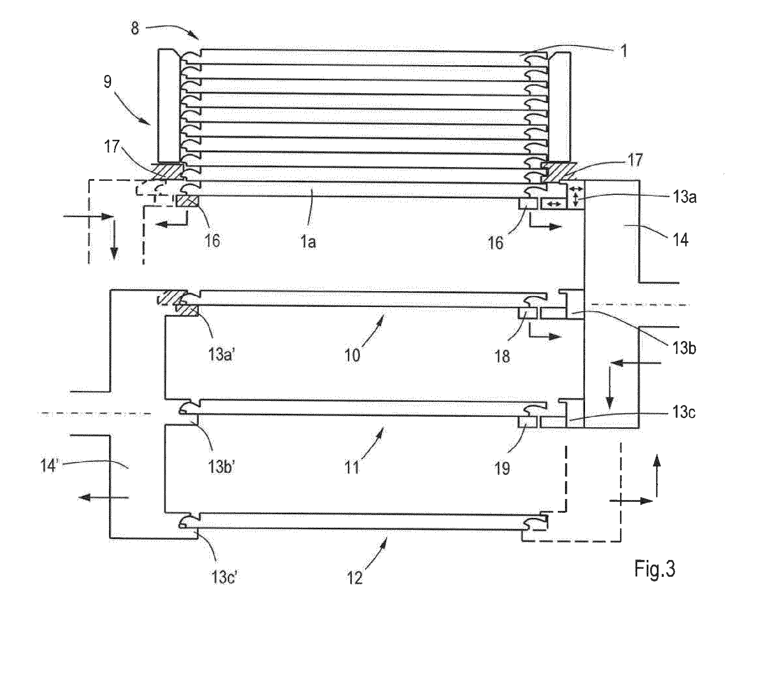

The functioning of the apparatus 8 is further illustrated in an alternative embodiment in Fig. 3. Parts that correspond with those in the embodiment of Fig. 2 are indicated by the same reference signs. Fig. 3 shows again the common frame 14 including the engaging members 13 which is movable in vertical direction and horizontal direction. In this embodiment the apparatus 8 is also provided with an opposite common frame 14' including engaging members 13'. The opposite common frame 14', however, is only movable in horizontal direction.

The embodiment of Fig. 3 shows supporting elements 16 at the feeding station 9 on which a stack of panels 1 can rest. When engaging the lower panel of the stack by the upper engaging member 13a the panels 1 above the lower panel 1a are supported by stack supports 17. In order to avoid mutual obstruction of the stack supports 17 and the upper engaging member 13a, the upper engaging member 13a and the stack supports 17 may be located at different locations in longitudinal direction of the panels 1. The supporting elements 16 and the stack supports 17 are arranged such that upon engaging the lower panel 1a of the stack of panels 1, the stack supports 17 are displaced to support the remaining stack above the lower panel 1a whereas the supporting elements 16 are displaced from below the lower panel 1a in order to create free space to displace the panel 1a downwardly.

A similar mechanism can be present at the machining station 10 and the inserting station 11. At least during a part of the period of the steps of machining and inserting, the engaging members 13 are travelling upwardly as described hereinbefore. In order to keep the panels 1 at a correct position during the treatment steps the apparatus 8 is provided with a machining station support 18 at the machining station 10 for supporting and/or retaining there a panel 1 and an inserting station support 19 at the inserting station 11 for supporting and/or retaining there a panel 1.

Furthermore, Fig. 3 shows by arrows that the common frame 14 and the opposite common frame 14' are displaceable in horizontal direction. The engaging members 13, 13' comprise U-shaped portions to hold the panels 1 also in vertical direction. Additionally, the engaging members 13a-13c at the right side of Fig. 3 comprise holding surfaces for holding a panel 1, which are displaceable with respect to the common frame 14 such that the apparatus can be adjusted in case of varying panel dimensions.

The embodiment according to Fig. 3 works as follows. The engaging member 13a engages the lower panel 1a of the stack, whereas the stack supports 17 engage the neighbouring panel above the panel 1a, and the supporting elements 16 are displaced from below the lower panel 1a. Then, the common frame 14 including panel 1a is displaced downwardly to machining station 10 where the engaging member 13a' engages the left side of the panel 1a and the machining station support 18 supports the right side of the panel 1a. The panel 1a has now a fixed position with respect to the opposite common frame 14' and can be machined at the machining station 10. Subsequently, the common frame 14 is displaced successively outwardly, upwardly and inwardly to pick up a next lower panel at the feeding station 9. At the same time, when the common frame 14 is displaced inwardly or leftwardly in Fig. 3, the engaging members 13b and 13c engage the panels 1 that are present at the machining station 10 and the inserting station 11, respectively. Then, the machining station support 18 and the inserting station support 19 are displaced from below the panels and the opposite common frame 14ʹ is displaced outwardly or leftwardly. Subsequently, the common frame 14 including the engaged panels 1 is displaced downwardly. In this way the common frame 14 serves to move the panels in steps to next stations whereas the opposite common frame 14' serves to temporarily hold the panels at the processing stations 10, 11 and 12.

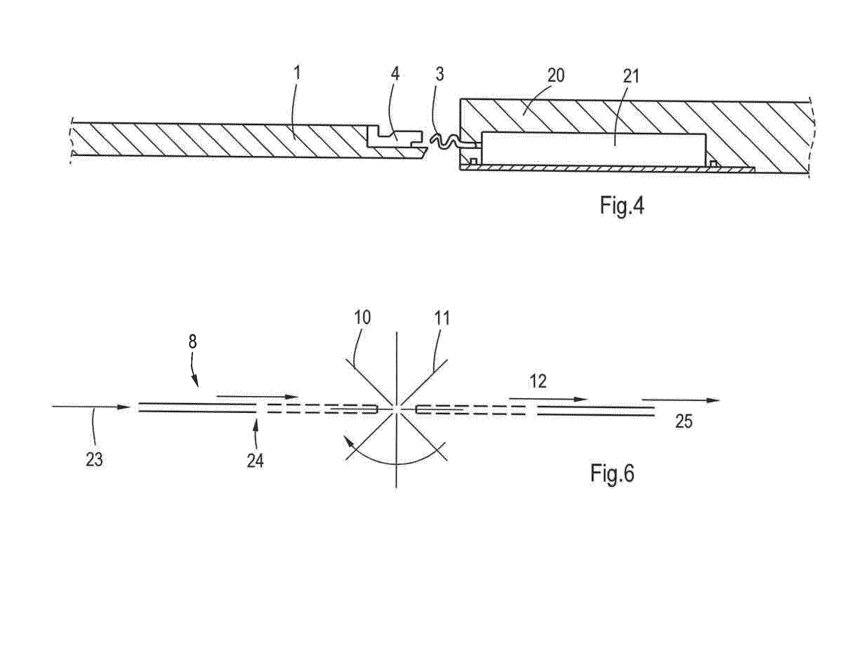

At the inserting station 11 the separate locking elements 3 can be inserted into panels 1 by air pressure. This is illustrated in Fig. 4. The panel 1 is aligned with the exit of a shooting device 20 where a locking element 3 is disposed. The shooting device 20 can be controlled such that compressed air 21 shoots the locking element 3 into the recess 4 of the panel 1.

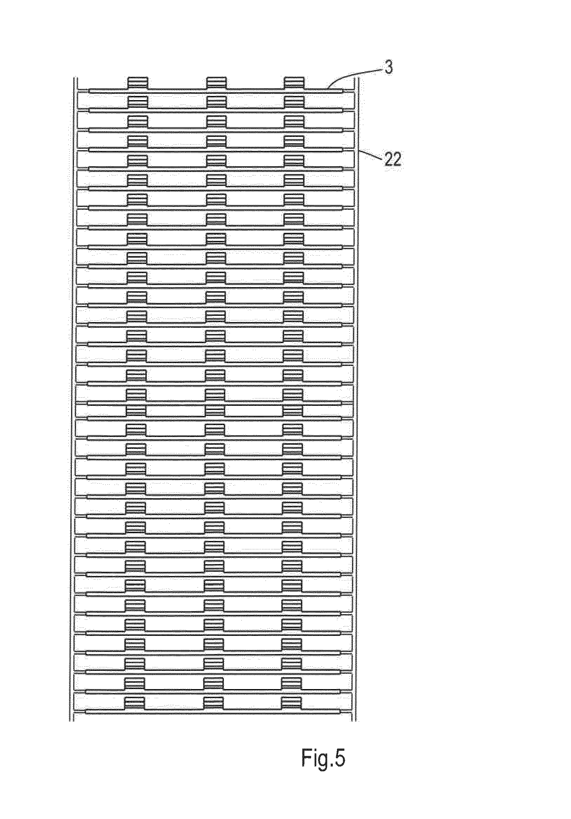

Before entering the locking element 3 into the shooting device 20 it can be separated from a blank 22 that includes a series of locking elements 3, as illustrated in Fig. 5. Separation may be performed by a cutting element and a screw holding the locking elements in its turns and having an increasing pitch to move the locking elements away from each other as soon as they are cut from the blank. Alternatively, separation may be performed by blanking, punching, die cutting, guillotine cutting or the like.

The various stations and transfer elements are controlled by an indexing system including a drive having an output shaft having several cam assemblies to control movements of the movable parts of the stations and transfer elements. This is quite a simple system to drive parts in a synchronised manner. The system is simple, reliable and can work at high speeds. It is also possible that several indexing systems are applied, which are mechanically or electronically coupled to each other.

Fig. 6 shows an alternative embodiment of the apparatus 8 according to the invention in a very schematic way. The embodiment comprises a feeding conveyor 23 for substantially continuously supplying panels 1. The embodiment is also provided with a processing assembly which comprises a magazine 24 for receiving the continuously supplied panels 1. The processing assembly is further provided with an indexing system for taking the panels 1 from the magazine 24 in a substantially discontinuous manner to a plurality of processing stations including the machining station 10 for making a recess 4 into a panel 1, an inserting station 11 for inserting a locking element 3 into a recess 4 of a panel 1, and a discharge station 12 for discharging the assembled panel 1. The assembled panels 1 are discharged by means of a discharging conveyor 25. In this case the indexing system comprises a rotatable member.

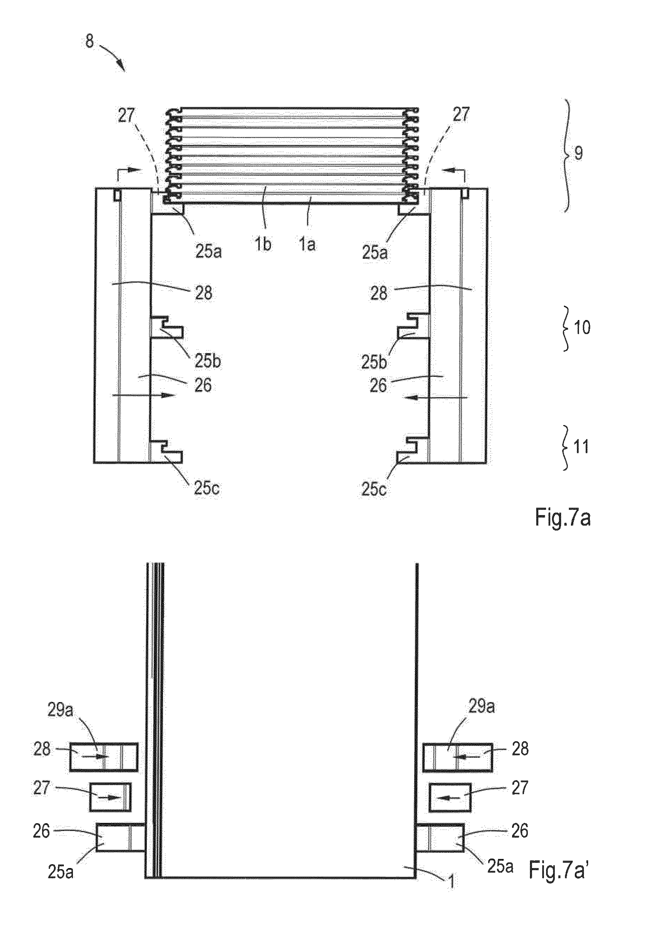

The functioning of another alternative embodiment of the apparatus 8 is shown in Figs. 7a-7s and 7a'-7s'. Corresponding to the embodiments as described hereinbefore the apparatus 8 is provided with the feeding station 9, machining station 10, inserting station 11 and discharge station 12. The apparatus comprises pairs of opposite processing station support members 25a, 25b, 25c facing each other such that each pair of engaging members can engage a panel 1 at opposite sides thereof. The processing station support members 25a, 25b, 25c are mounted to a pair of first common frames 26, respectively. It can be seen that the shape of the processing station support members 25a-25c are adapted to the shape of the side edges of the panels 1 which are provided with tongues and grooves in this case. Figs. 7a and 7a' show a first condition of the apparatus 8: the upper pair of processing station support members 25a engage the lower panel 1a of the stack at the magazine at the feeding station 9.

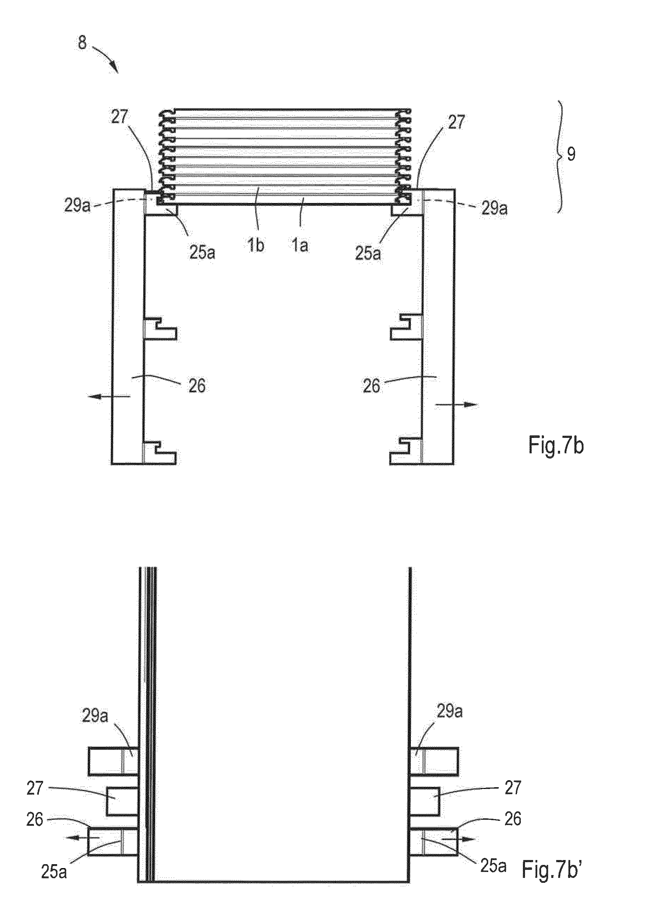

A next step of the working process of the apparatus 8 is illustrated by arrows in Figs. 7a and 7a', showing that stack supports 27 are displaced towards the stack of panels in order to engage the panel 1b which lies on the lower panel 1a of the stack, and a pair of second common frames 28 including respective pairs of engaging members 29a, 29b and 29c are displaced towards the panel 1a such that the pair of engaging members 29a engage the panel 1a. Figs. 7b and 7b' illustrate the resulting new condition: the upper pair of processing station support members 25a still engage the panel 1a, whereas the upper pair of engaging members 29a now also engage the panel 1a. Furthermore, the pair of stack supports 27 now engage the panel 1b. It is noted that the pair of stack supports 27 are also located at opposite sides of the apparatus 8 and face toward each other.

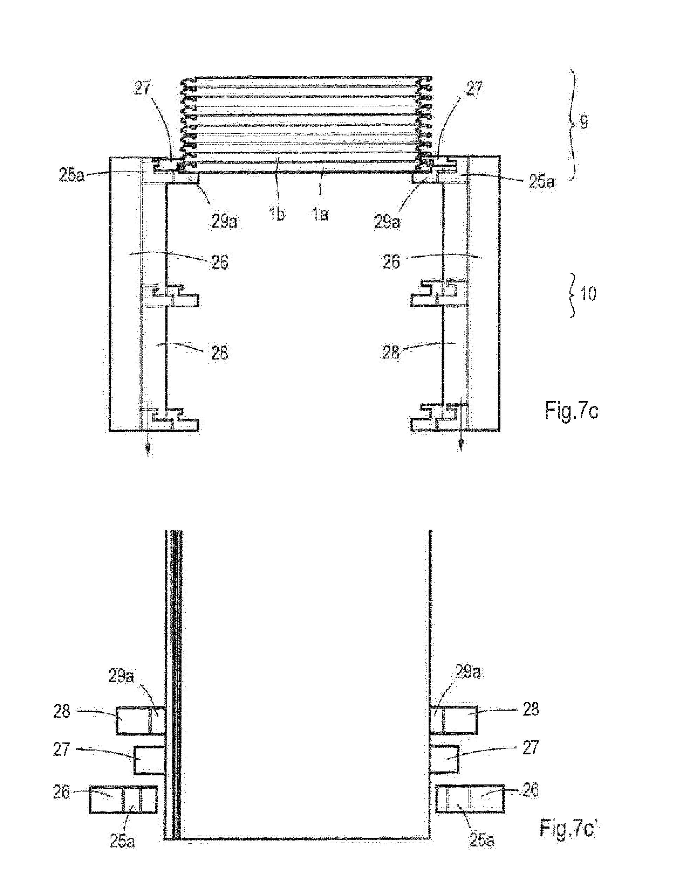

Figs. 7b and 7b' also show a next step of the working process by arrows: the pair of first common frames 26 including the processing station support members 25a-25c move away with respect to each other such that the upper pair of processing station support members 25a disengage the panel 1a at the feeding station 9. The new condition is shown in Figs. 7c and 7c'. The stack of panels 1 at the feeding station 9 is now supported by supporting the panel 1b through the pair of stack supports 27, whereas the panel 1a is hold by the pair of engaging members 29a. A next step is shown by arrows in Figs. 7c and 7c': the pair of second common frames 28 including the respective pairs of engaging members 29a, 29b and 29c are displaced downwardly such that the pair of engaging members 29a which hold the panel 1a will displace the panel 1a from the feeding station 9 to the machining station 10. During this step the stack supports 27 are also displaced downwardly in order to bring the panel 1b to an appropriate location at the feeding station 9 where it can be engaged by the upper pair of processing station support members 25a later on.

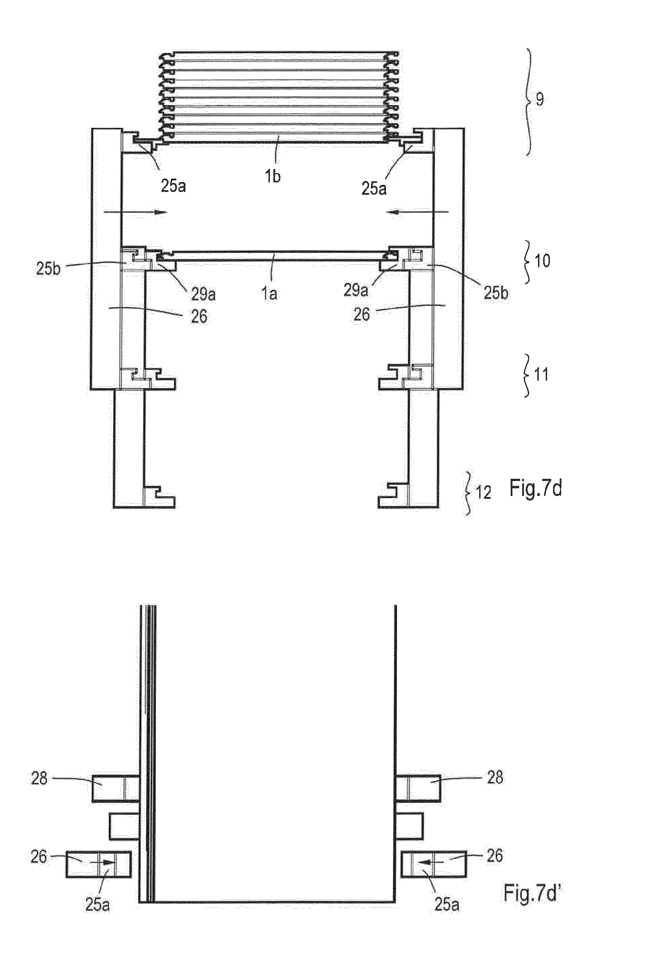

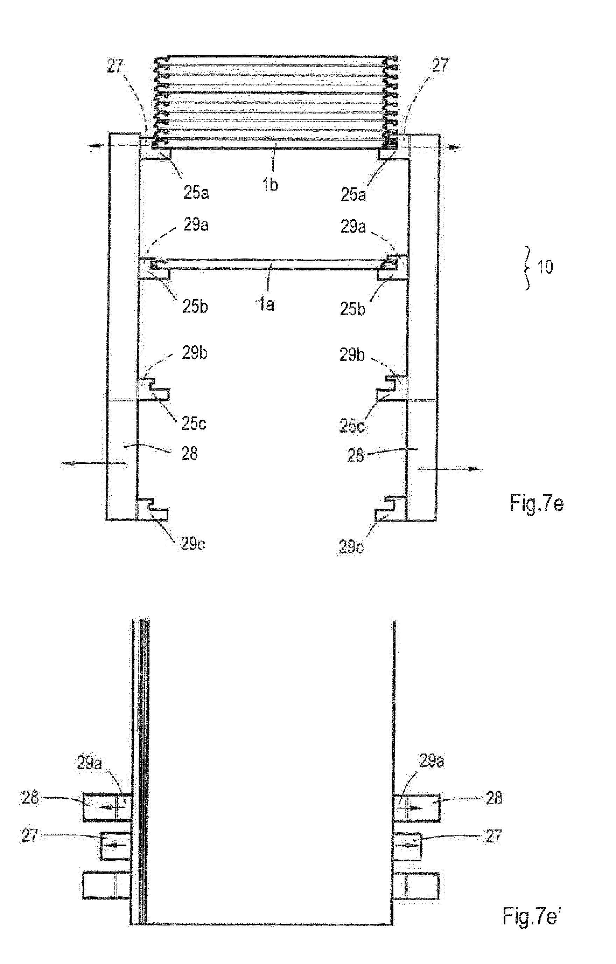

The resulting condition is illustrated in Figs. 7d and 7d'. These figures also show a next step by arrows: the pair of first common frames 26 including the processing station support members 25a-25c move to each other such that the upper pair of processing station support members 25a engage the panel 1b at the feeding station 9 and the middle pair of processing station support members 25b engage the panel 1a at the machining station 10. In the new condition as shown in Figs. 7e and 7e' the panel 1a can be machined at the machining station 10. At the same time, since the panels 1a and 1b are now hold by the pairs of processing station support members 25b and 25a, respectively, the pair of second common frames 28 including the respective pairs of engaging members 29a, 29b and 29c are displaced away with respect to each other as shown by arrows in Figs. 7e and 7e'. The stack supports 27 are also displaced away with respect to each other during this step.

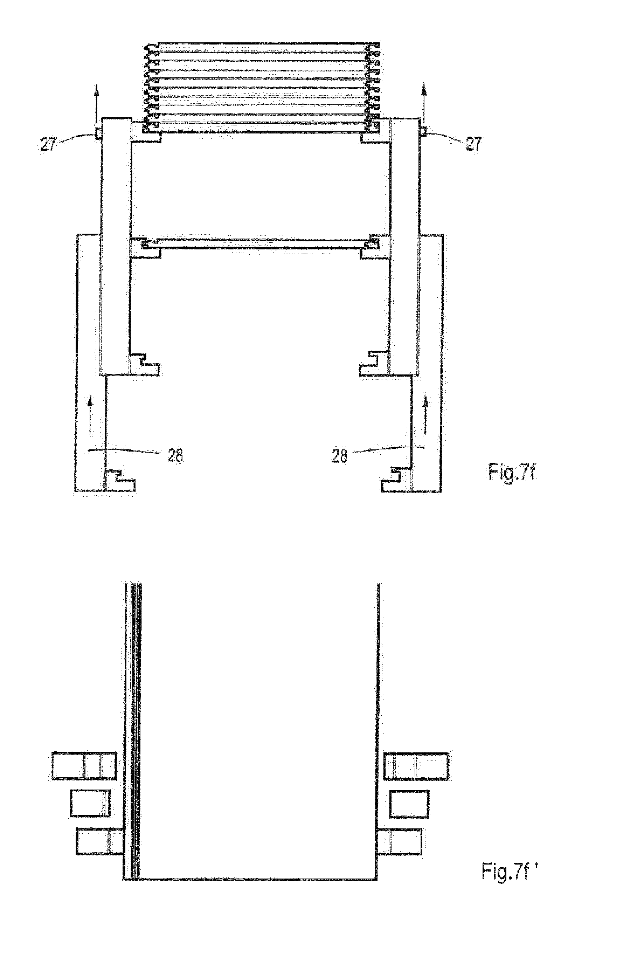

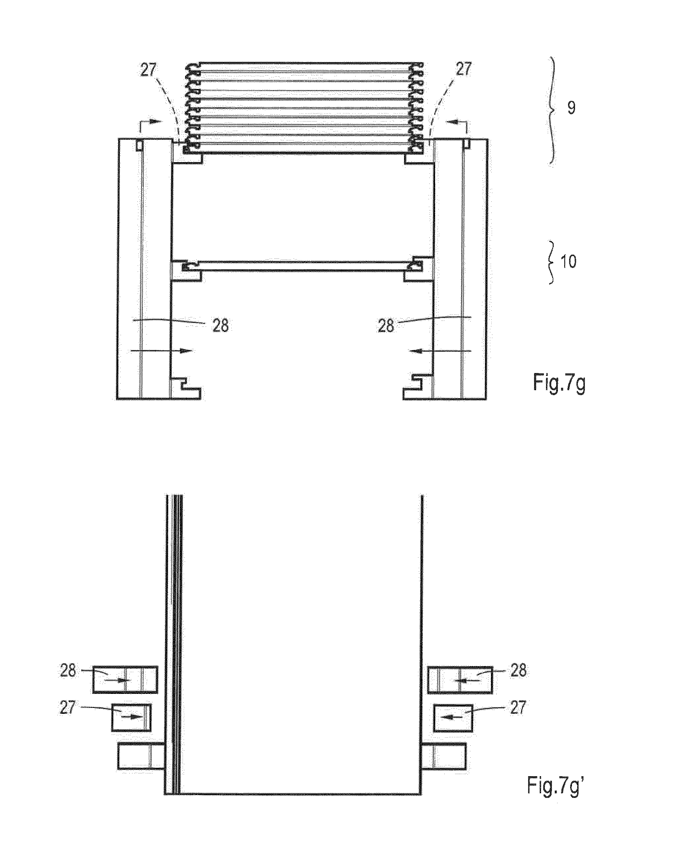

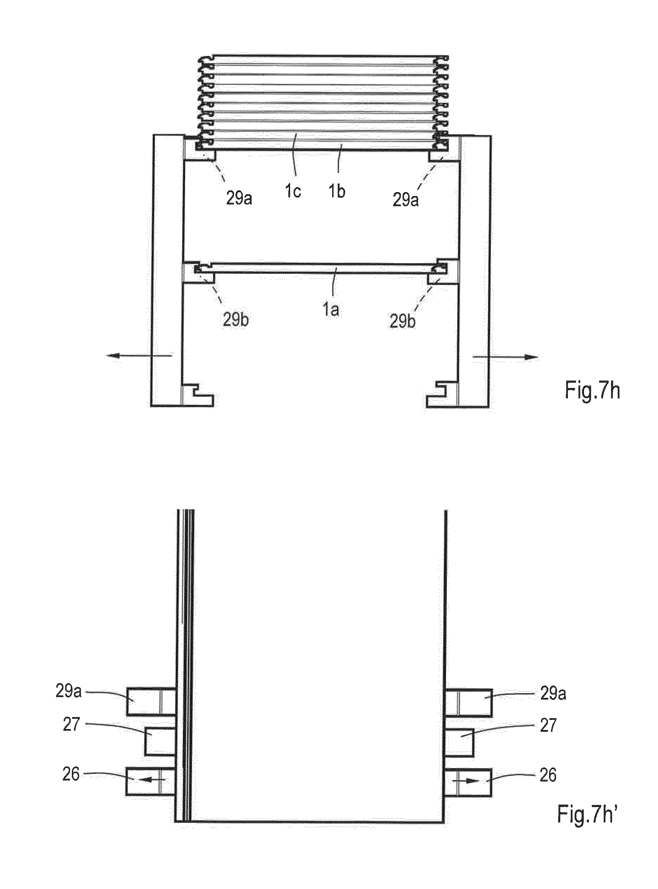

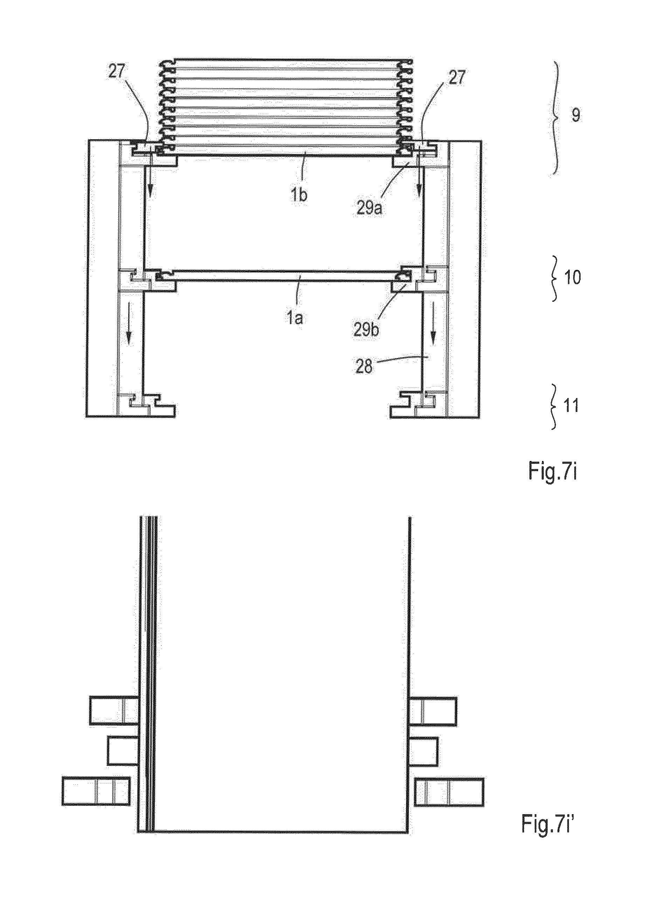

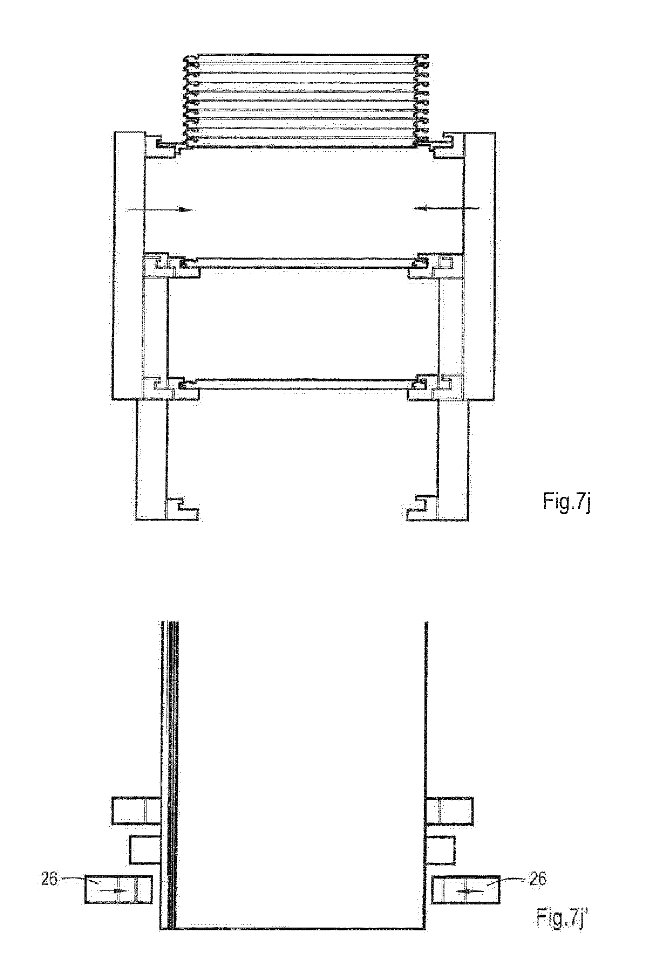

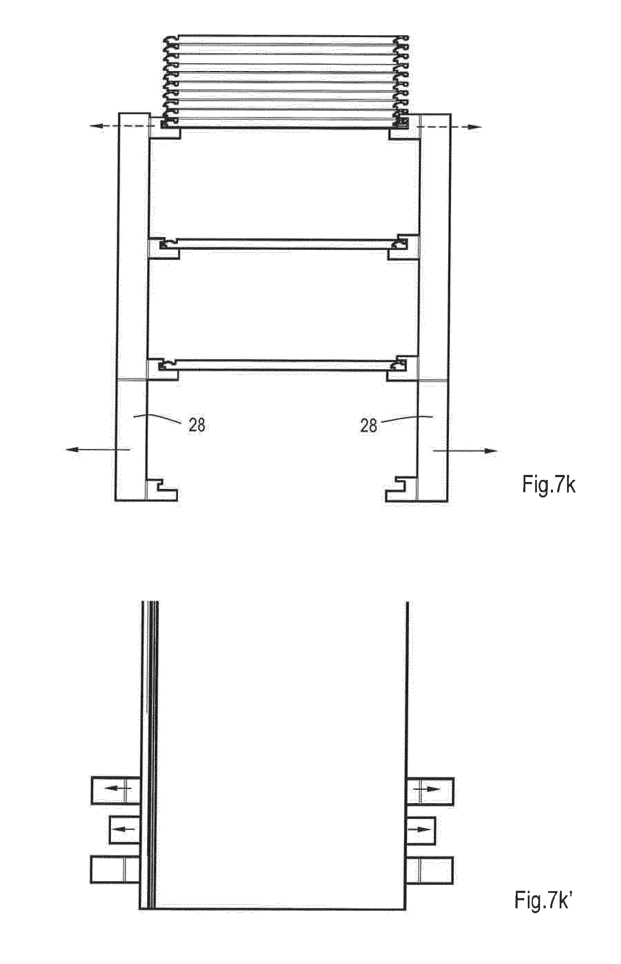

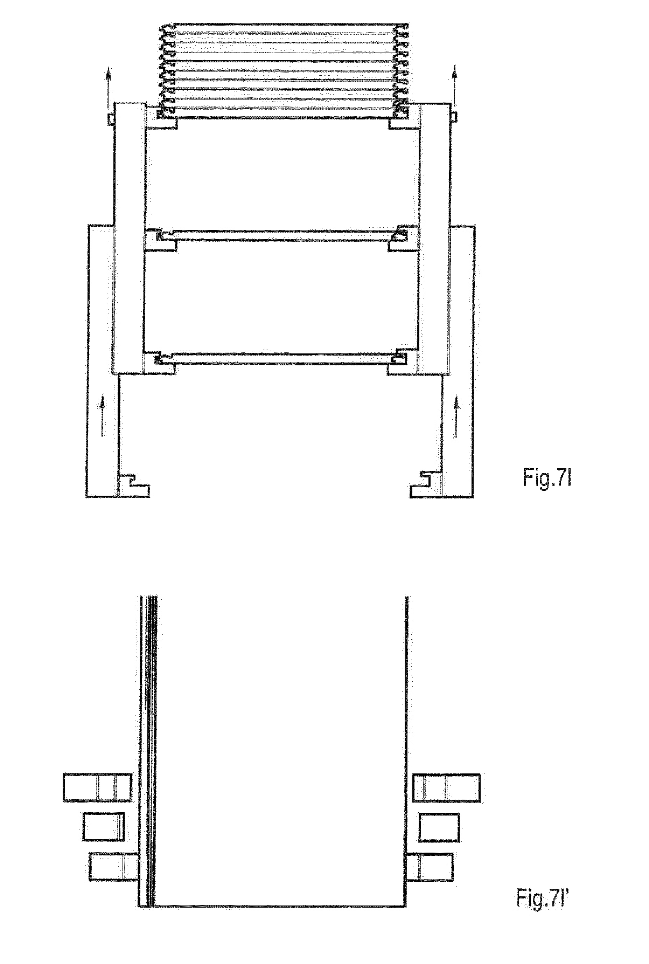

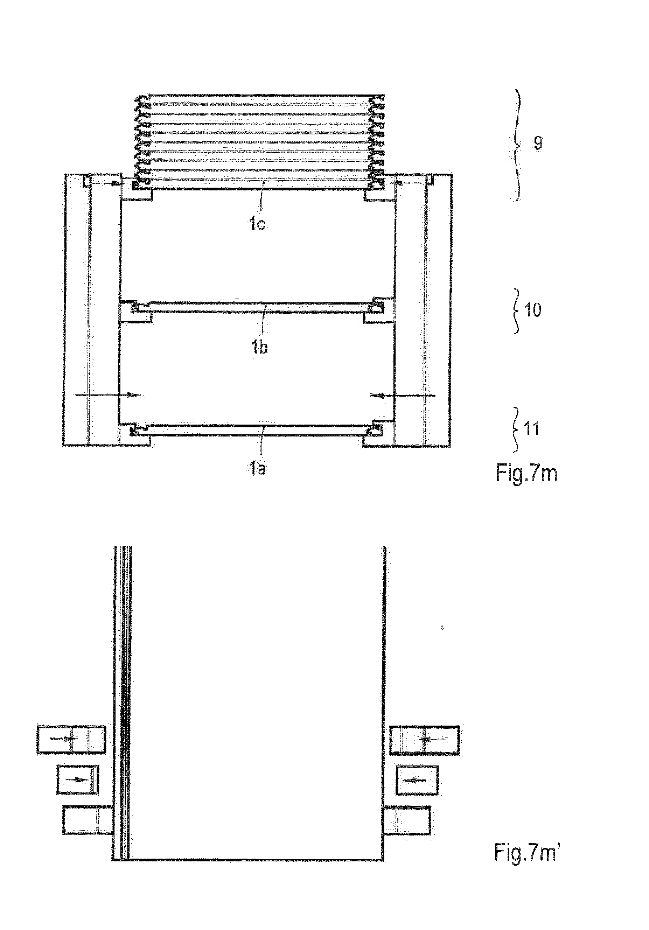

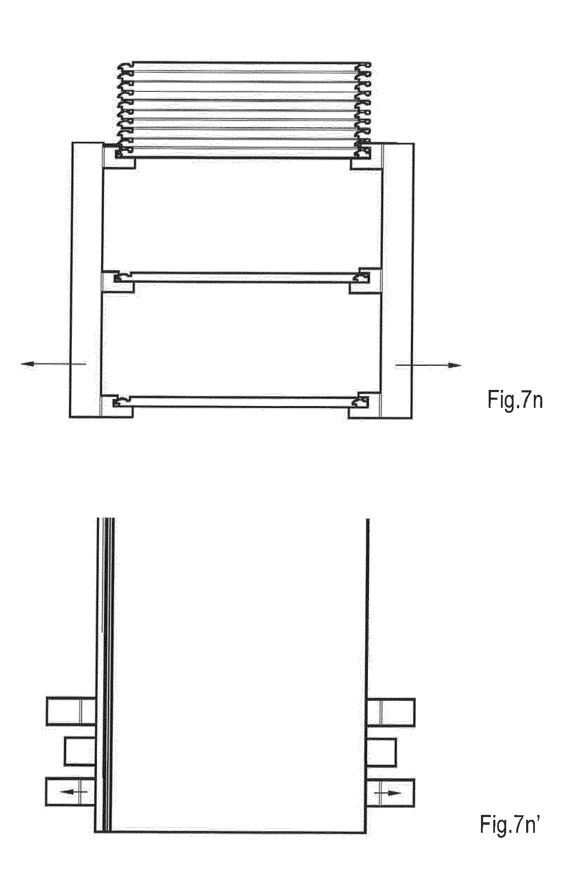

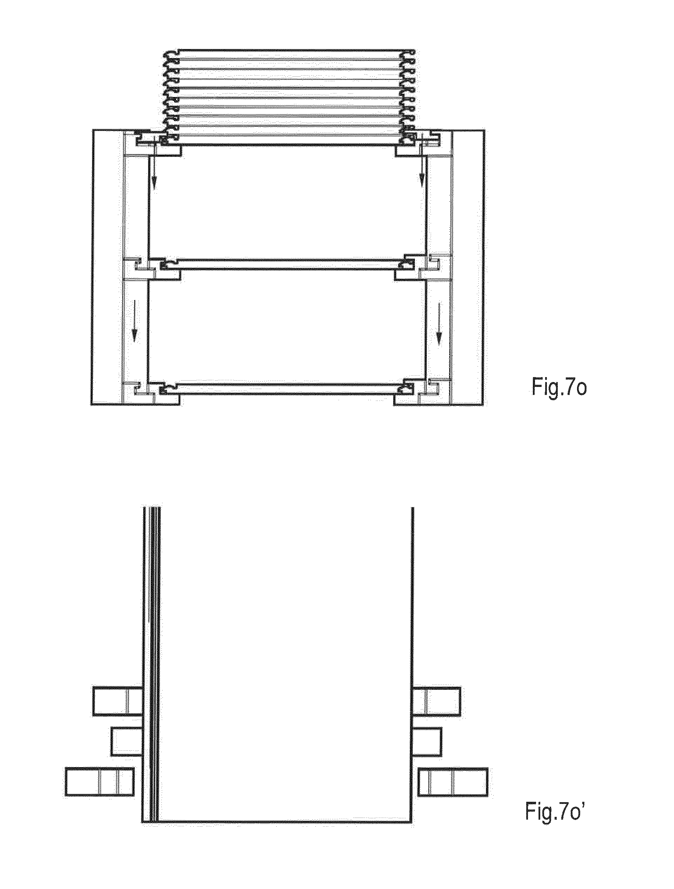

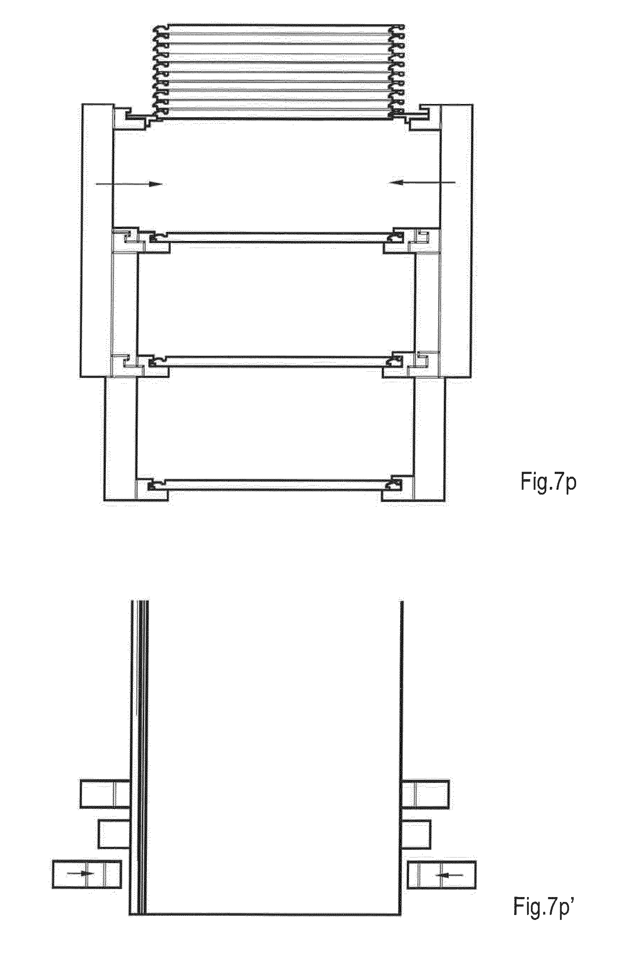

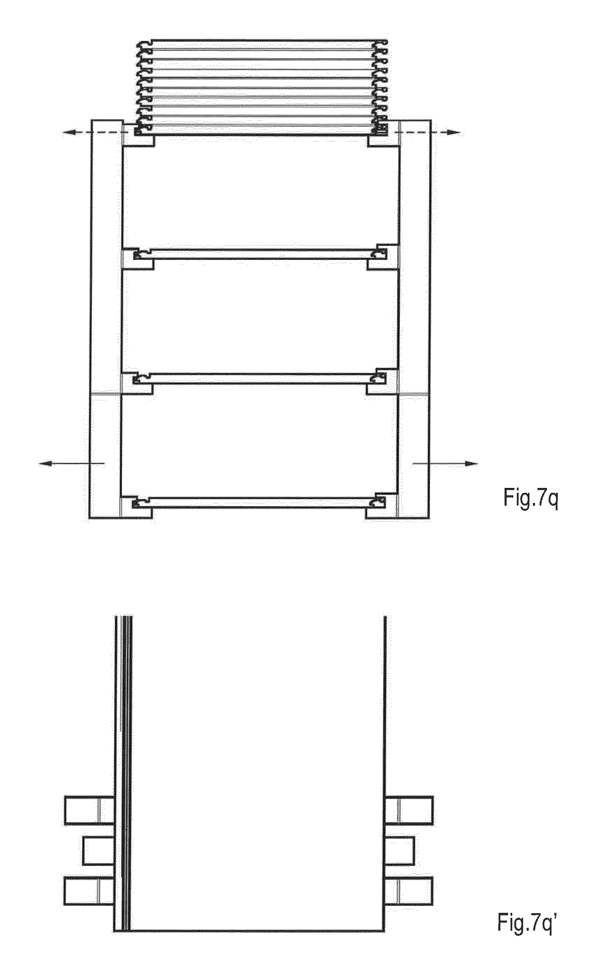

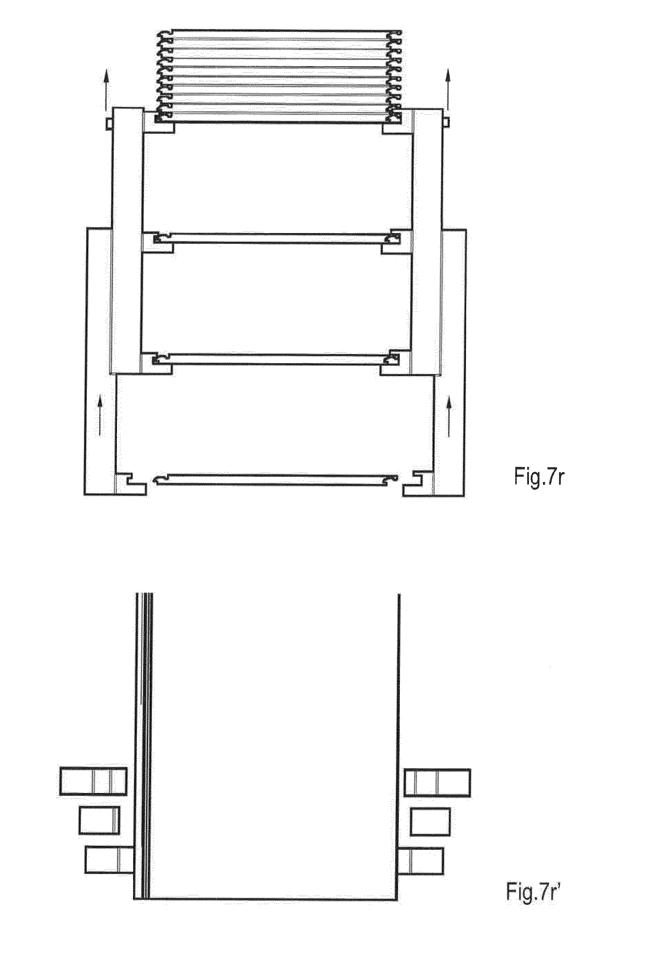

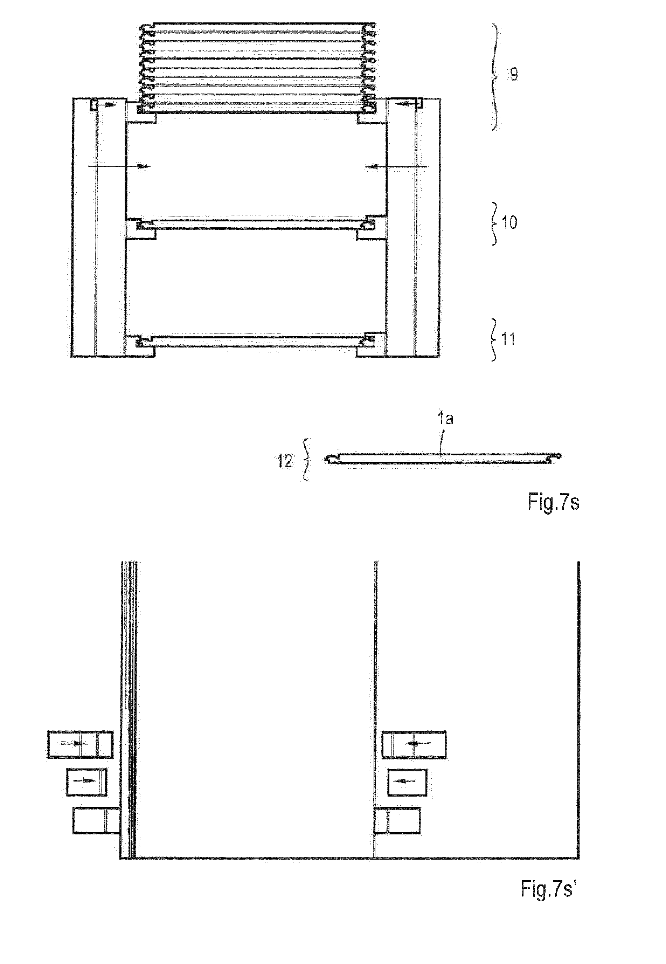

Figs. 7f and 7f' show a next step in which the stack supports 27 and the common frames 28 are displaced upwards, whereas Figs. 7g and 7gʹ show a subsequent step in which both the stack supports 27 and the common frames 28 are displaced to each other. In the resulting condition as shown in Figs. 7h and 7h' the pair of engaging members 29a engage the panel 1b, whereas the pair of engaging members 29b engage the panel 1a. Furthermore, the stack supports 27 engage the panel 1c.

In the condition as shown in Fig. 7g and 7g' the apparatus 8 has run one complete working cycle with respect to the condition as shown in Figs. 7a and 7a'. During one complete working cycle the panels 1 are transferred one processing station. It is noted that the processing station support members 25a-25c only move horizontally for temporarily holding the panels 1 in a fixed vertical position at the different stations 9, 10 and 11, whereas the stack supports 27 and the engaging members 29a-29c move horizontally and vertically so as to transport panels downwardly and move back upwardly in addition.

In order to be able to move the panels 1a and 1b downwardly, the pair of first common frames 26 are moved away with respect to each other, as illustrated by arrows in Figs. 7h and 7h'. A next step is shown by arrows in Figs. 7i and 7i': the engaging members 29a-29c are displaced downwardly such that the upper pair of engaging members 29a which hold the panel 1b will displace the panel 1b from the feeding station 9 to the machining station 10 and the middle pair of engaging members 29b which hold the panel 1a will displace the panel 1a from the machining station 10 to the inserting station 11.

Figs. 7m and 7m' show a condition after a next complete working cycle. The panel 1a has arrived at the inserting station 11 and the panel 1b has arrived at the machining station 10. Figs. 7s and 7sʹ show a condition after a subsequent complete working cycle where the panel 1a has arrived at the discharge station 12.

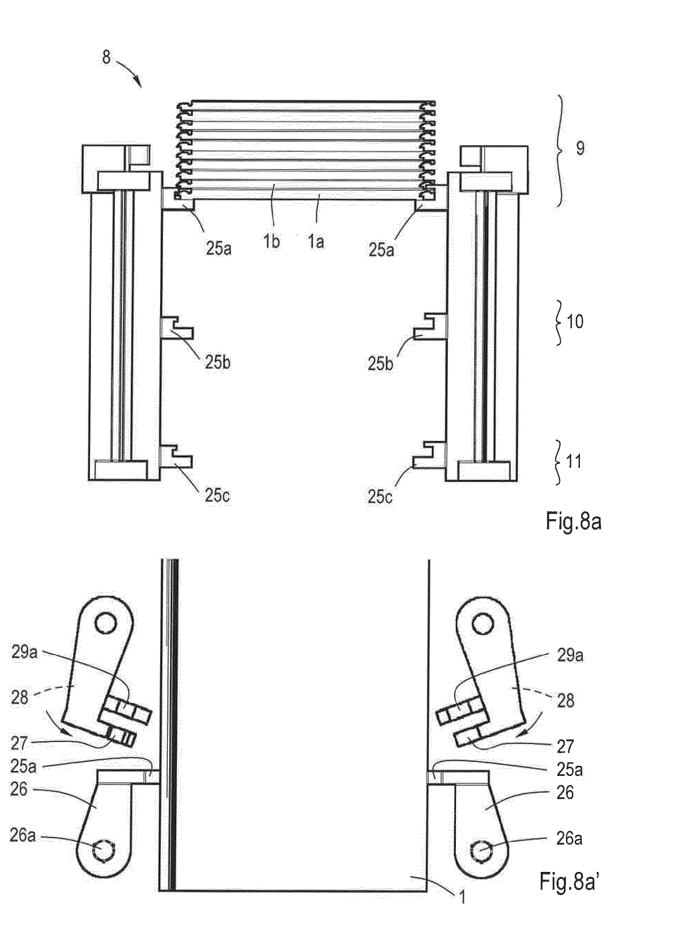

Figs. 8a-8s and 8a'-8s' show conditions and steps of the working process of still another alternative embodiment of the apparatus 8. This embodiment has a lot of similarities to the embodiment as shown in Figs. 7a-7s and 7a'-7s', and corresponding reference signs are used for similar components. The processing station support members 25a-25c are mounted to the first common frames 26. In this embodiment the first common frames 26 are rotatable about first axes of rotation 26a which extend upwardly.

The stack supports 27 and the second common frames 28 including the engaging members 29a-29c are also rotatable about axes of rotation which extend upwardly. Additionally, the stack supports 27 and the second common frames 28 are also translatable along their axes of rotation. Furthermore, the steps of engaging, displacement and disengaging work in a similar manner as described in relation to the embodiment as shown in Fig. 7.

An alternative embodiment may be a combination of the embodiments of Figs. 7 en 8, for example the stack supports 27 may be translatable members, whereas the processing station support members 25a-25c and the engaging members 29a-29c are rotatable members.

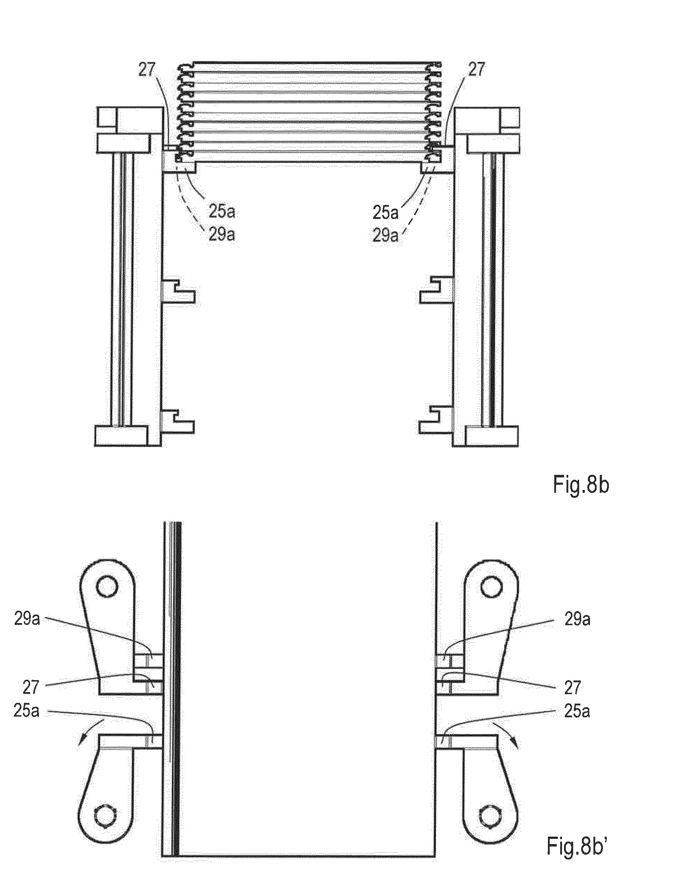

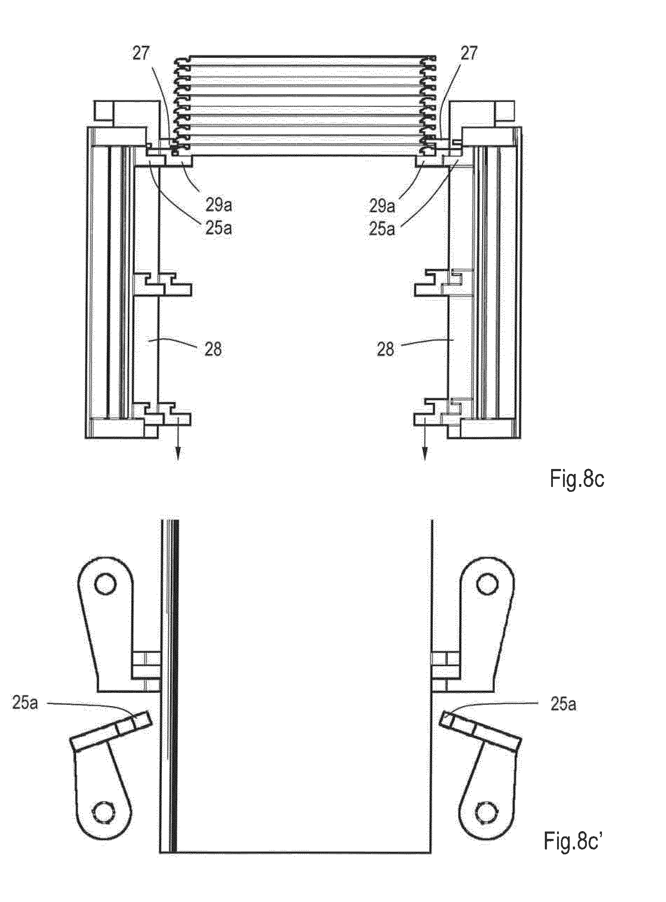

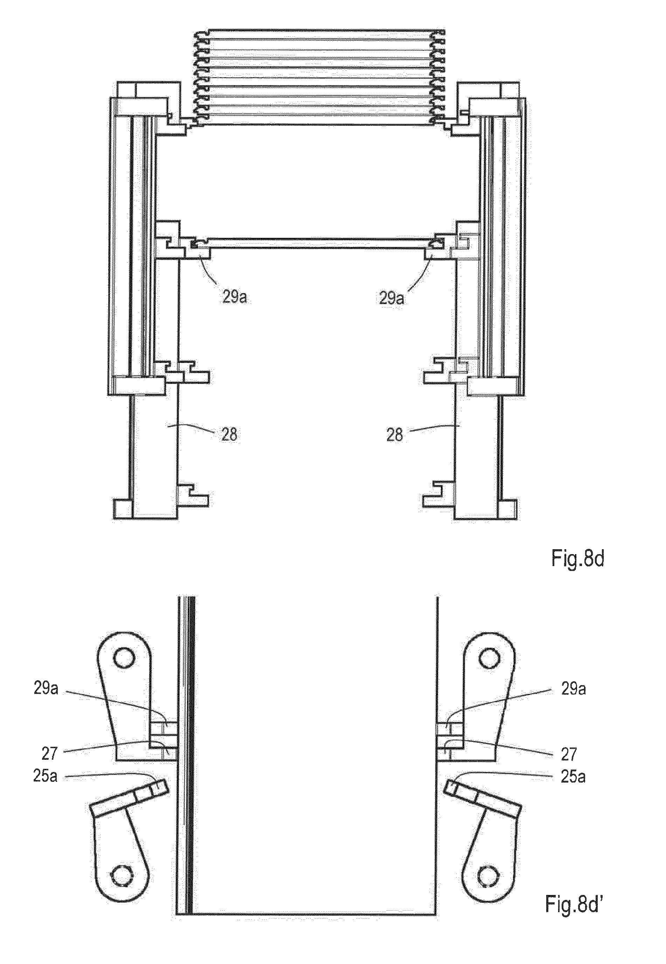

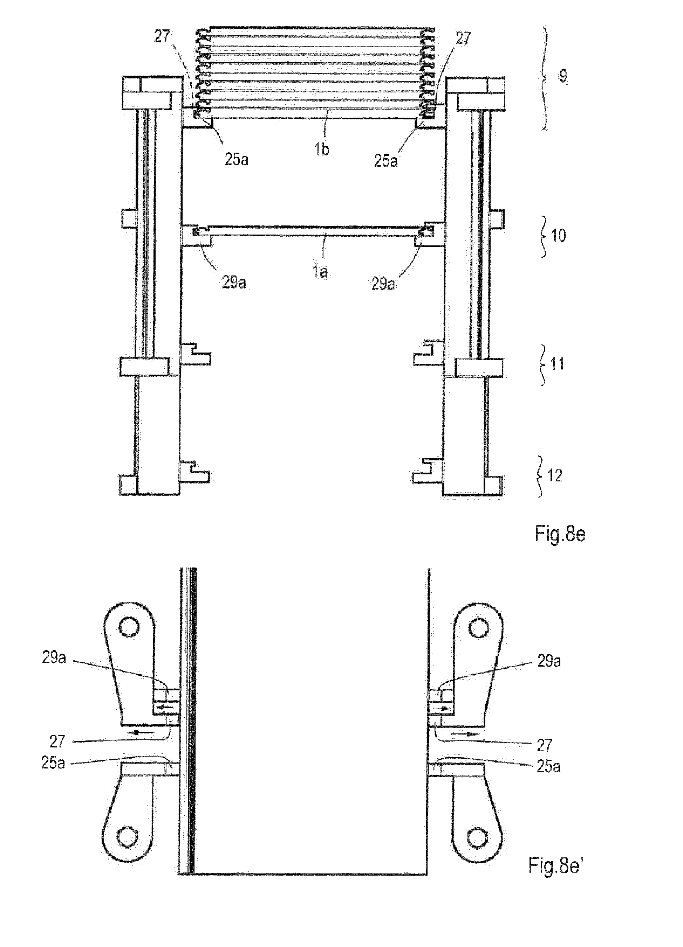

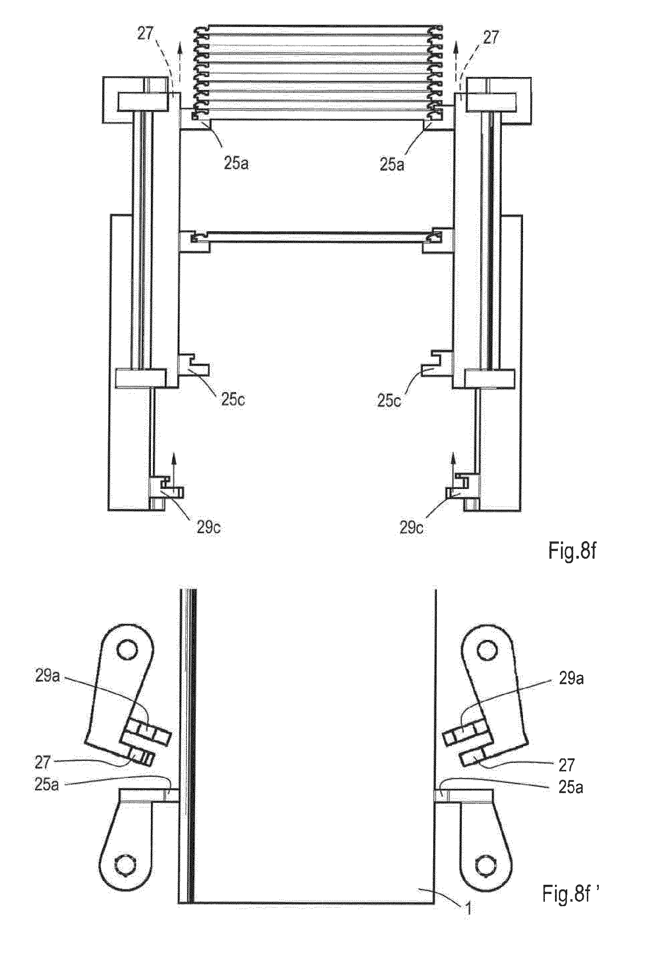

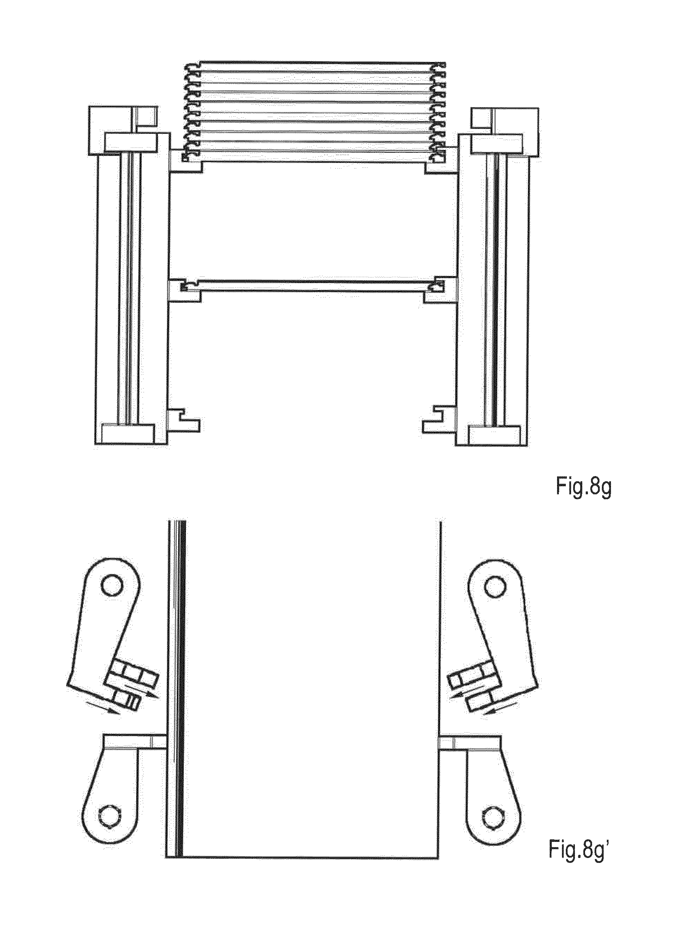

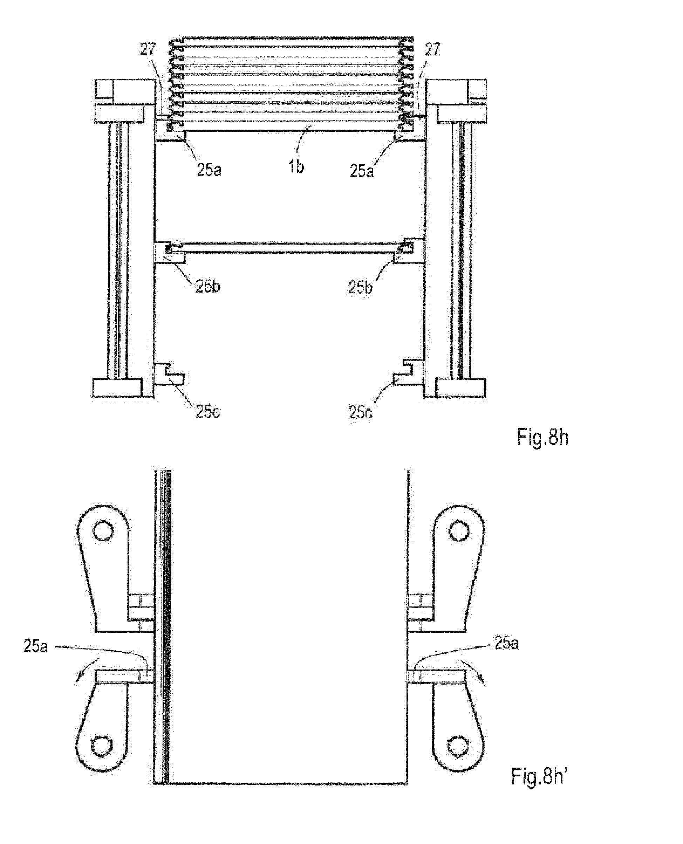

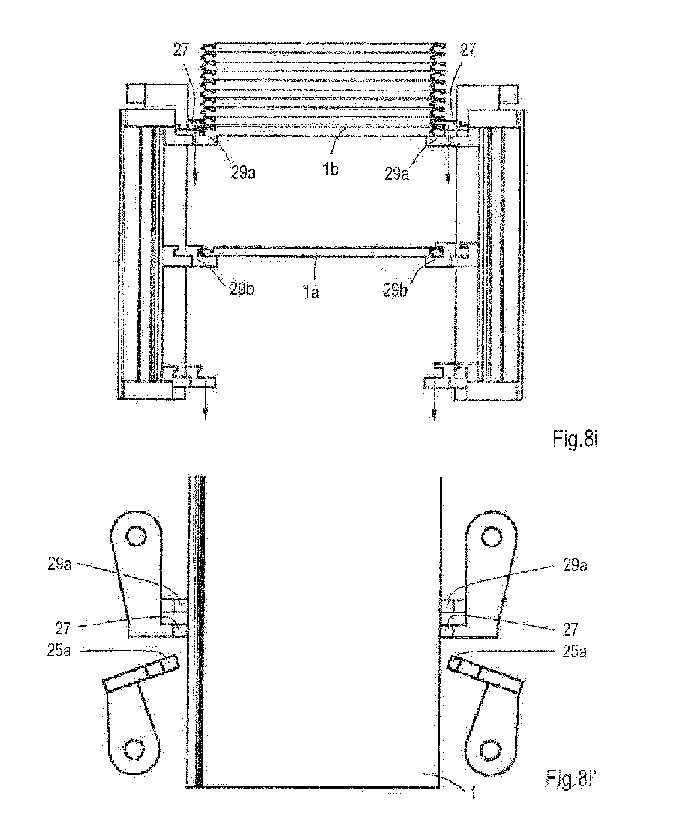

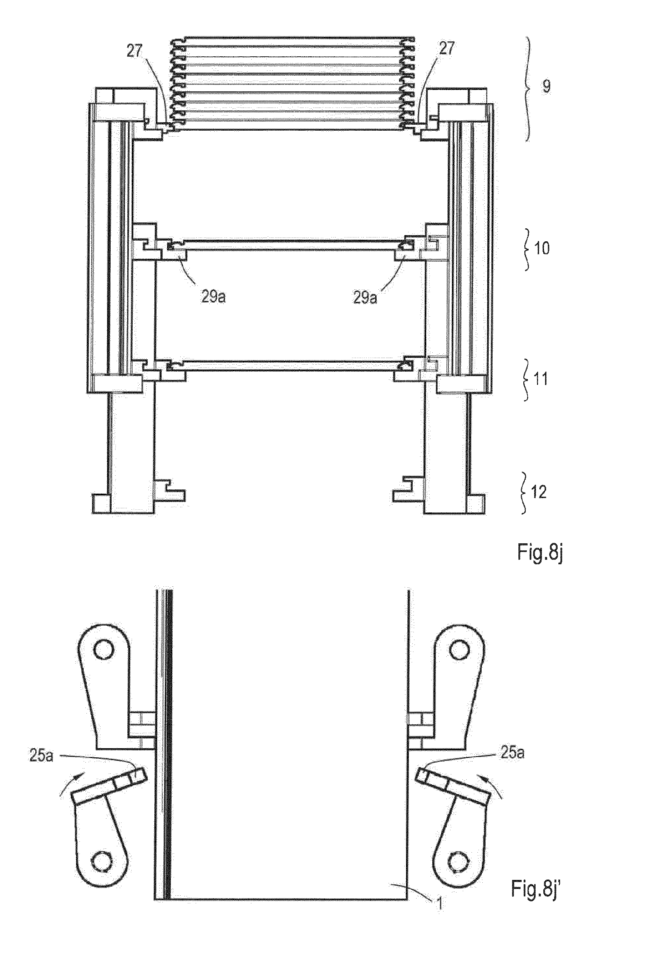

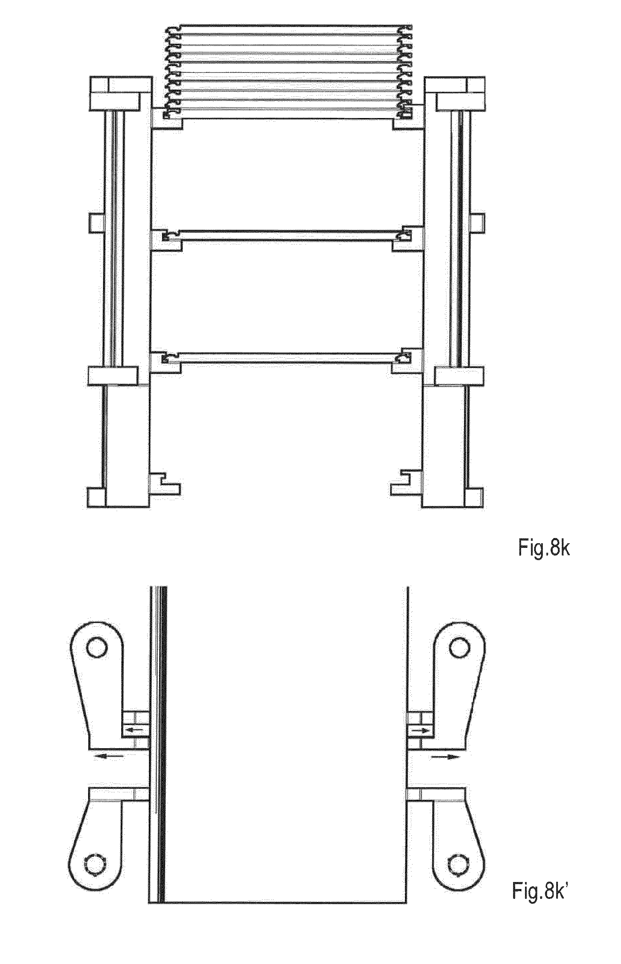

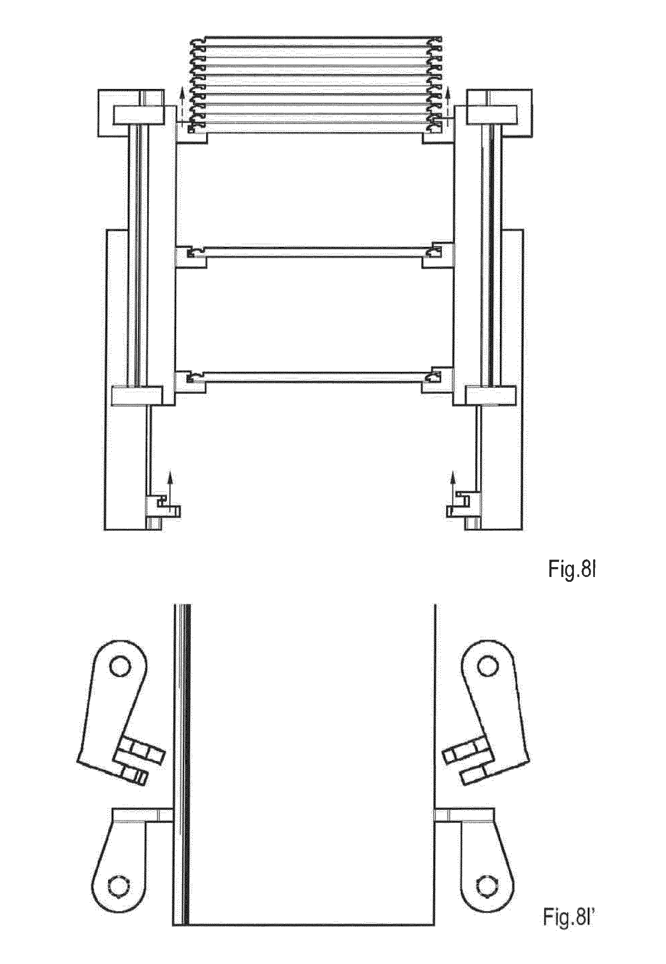

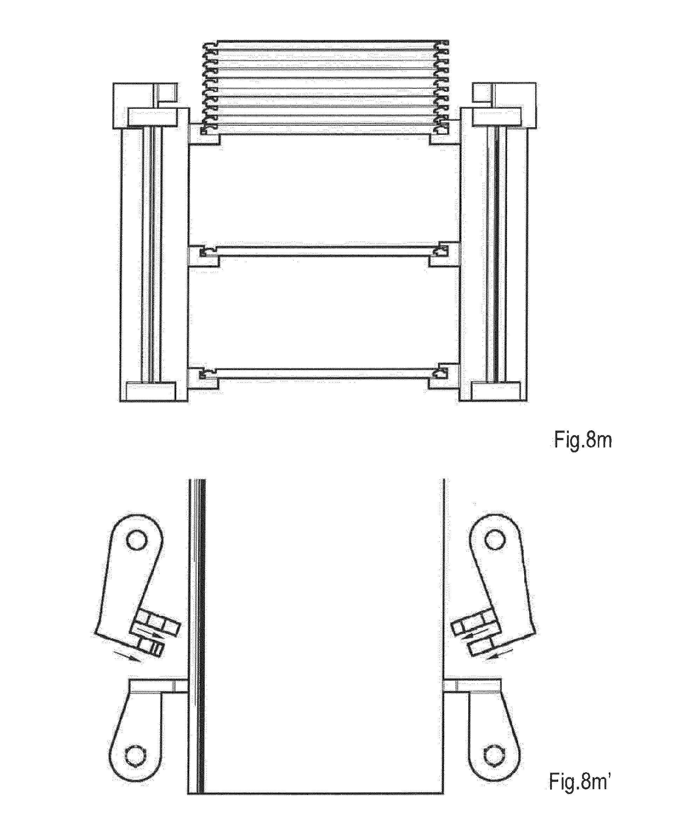

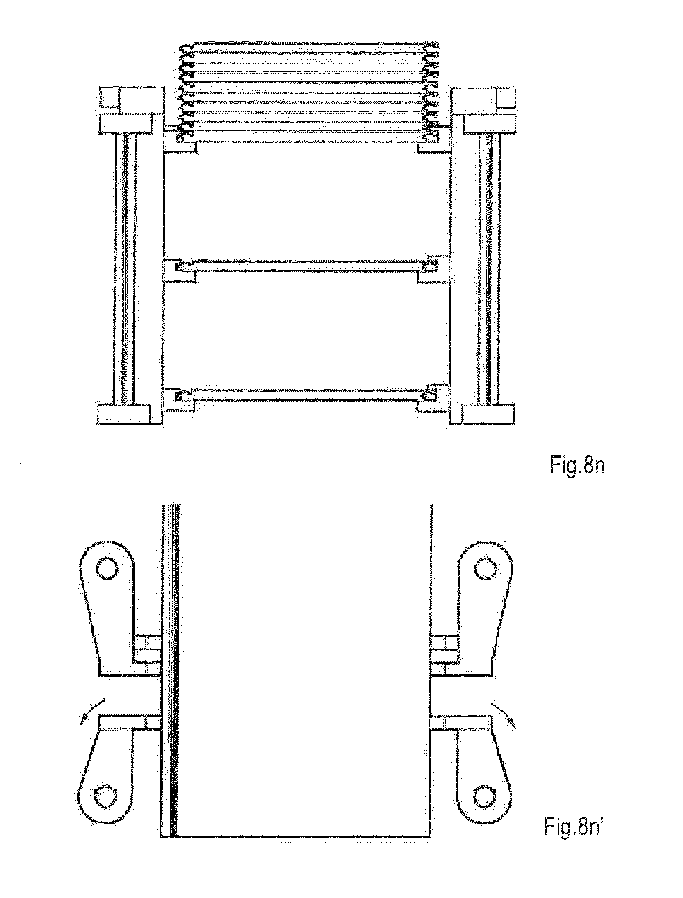

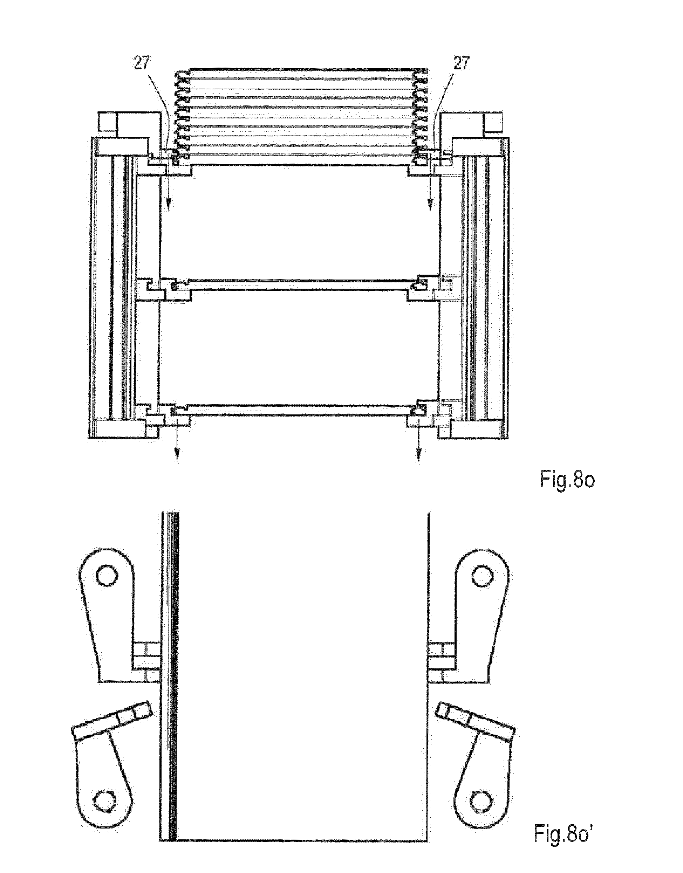

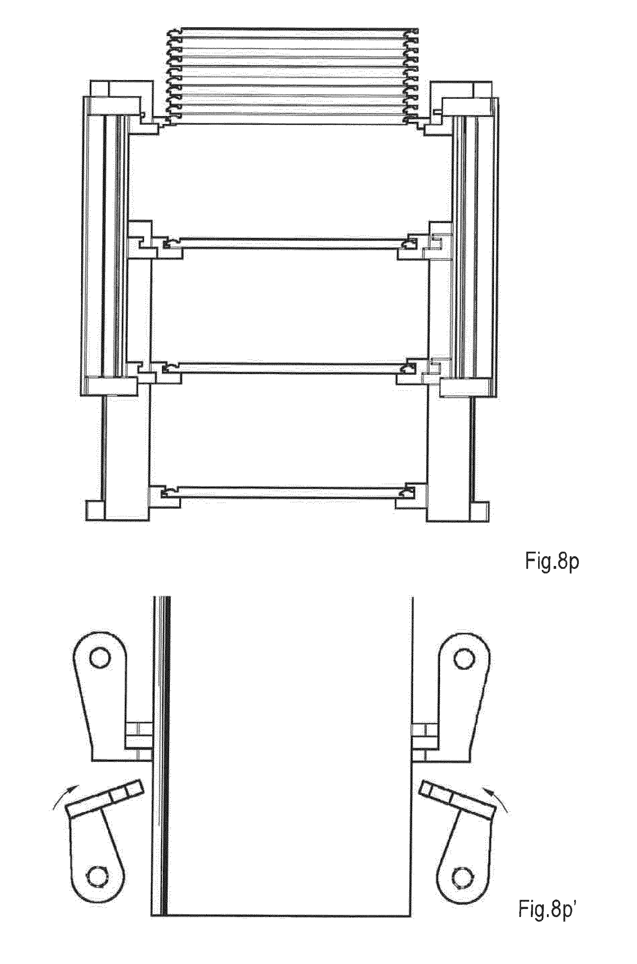

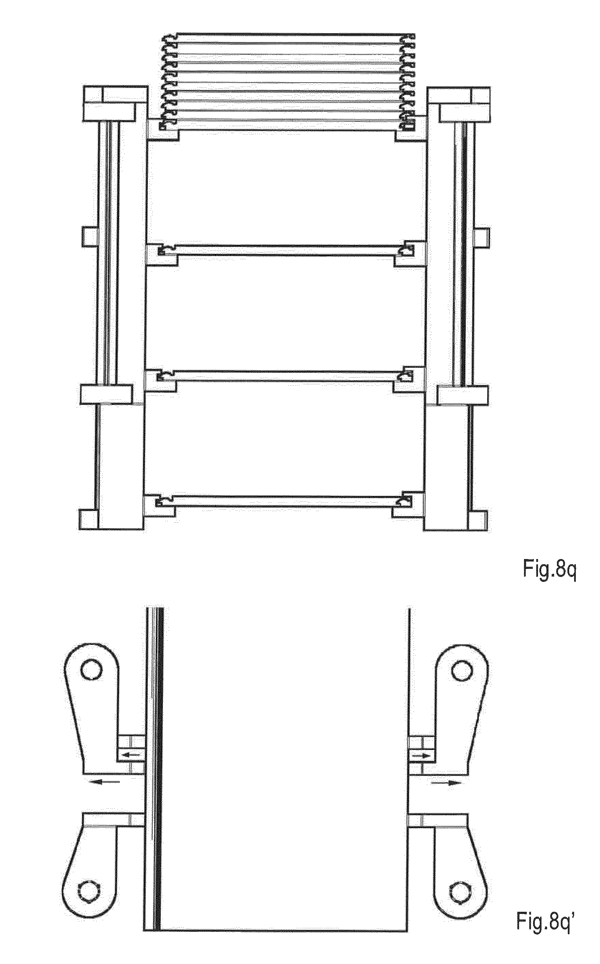

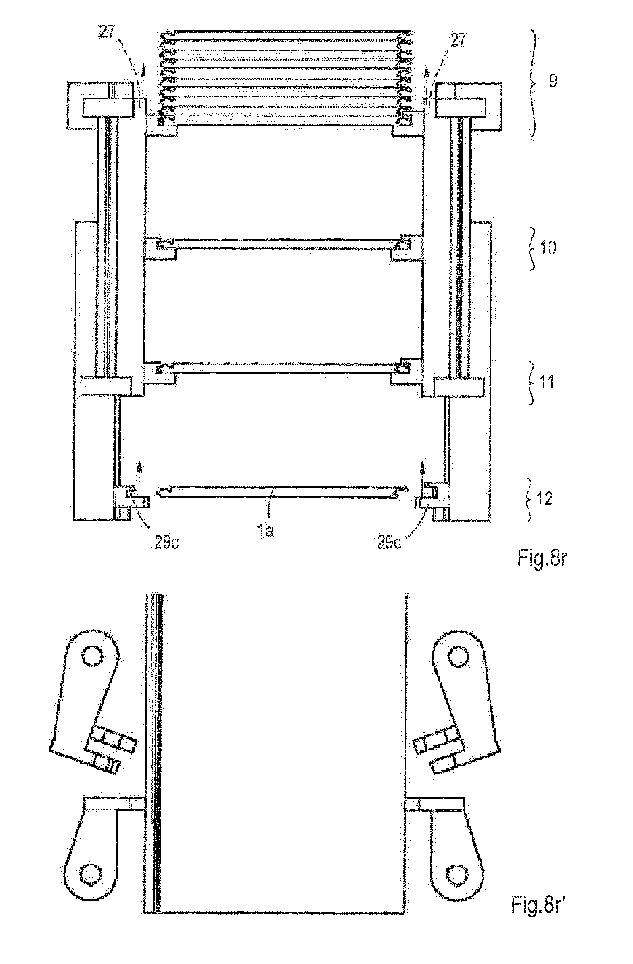

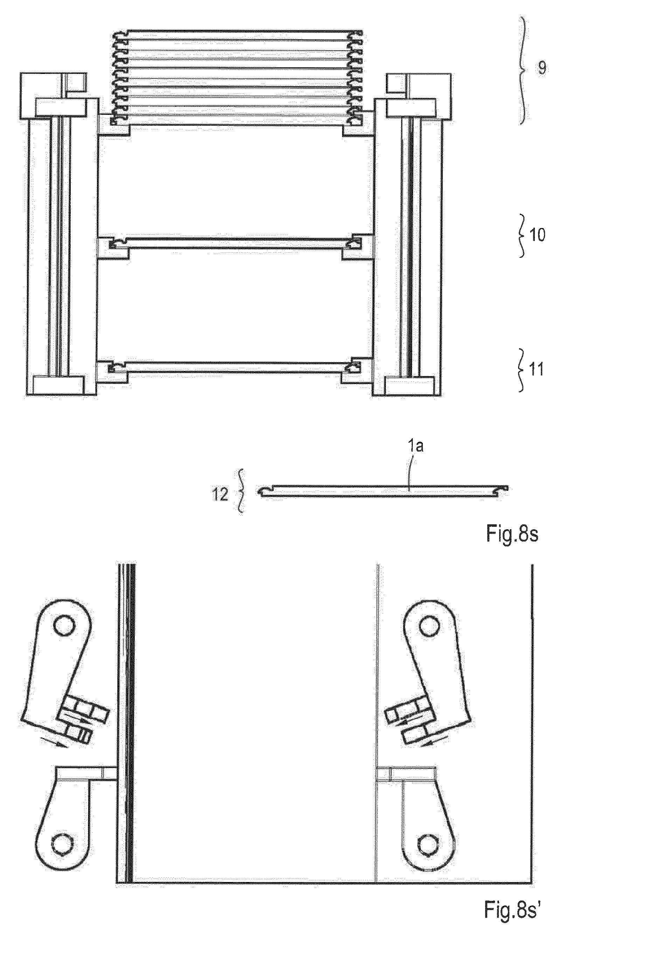

The apparatus 8 may be provided with a single prime mover, for example an electric motor, which drives the stack supports 27, the processing station support members 25, the engaging members 29, and devices at the processing stations via a power take-off. For example in the embodiments of Figs. 7 and 8 the power take-off can comprise three power take-off drives: a first drive for driving the stack support 27, the processing station support members 25 and the engaging members 29 at one side of the panels 1; a second drive for driving the stack support 27, the processing station support members 25 and the engaging members 29 at the opposite side of the panels 1; and a third drive for driving a machining device at the machining station 10 and an inserting device at the inserting station 11. Nevertheless, it is also conceivable that the power take-off comprises two drives for driving the opposite stack supports 27, the opposite processing station support members 25 and the opposite engaging members 29, whereas treating devices at the processing stations are driven by one or more independent drives. Alternatively, the apparatus 8 comprises a plurality of separate prime movers which are electronically connected to each other and controlled such that movements of different components occur in dependence of each other.

The invention is not limited to the embodiments shown in the drawings and described hereinbefore, which may be varied in different manners within the scope of the claims. It is possible that other types of separate locking elements are applied than described and shown hereinbefore.

It is noted that the indexing system is also suitable for manufacturing panels without inserting a locking element. Such an apparatus comprises a feeding conveyor for substantially continuously supplying panels and a processing assembly including a magazine for receiving the continuously supplied panels, wherein the processing assembly is provided with an indexing system for taking the panels from the magazine in a substantially discontinuous manner to at least two processing stations, including a machining station for mechanical treatment of a panel and a discharge station for discharging the assembled panel. Similarly, the number of processing stations may be increased, for example for cutting stations, milling stations or the like. Furthermore, it is noted that the magazine may also be configured such that the panels remain within the magazine and are moved by the magazine along the processing or treating stations. This will be the case if the panels are received in the magazine in a spaced manner, either parallel, radially or otherwise positioned with respect to each other, so that the panels can be treated without being moved relatively anymore.

The invention also includes a panel having a locking element inserted into a groove provided in an edge of the panel, the locking element being movable between a inactive position substantially within the groove and an active position protruding at least partly from the groove, the locking element being provided with a friction member engaging the groove, particularly near the open of the groove, when it is in its inactive position and being positioned outside the groove when it is in its active position.

## Claims

1. An apparatus for assembling panels and locking elements, comprising
a feeding station for supplying a panel,
a machining station for making a recess into a panel,
an inserting station for inserting a locking element into a recess of a panel,
a discharge station for discharging the assembled panel,
at least three movable engaging members, wherein each engaging member is suitable for engaging and conveying a panel, which engaging members are adapted such that
a first panel can be conveyed from the feeding station to the machining station,
a second panel can be conveyed from the machining station to the inserting station, and
a third panel can be conveyed from the inserting station to the discharge station
simultaneously during subsequent finite time periods.

2. An apparatus according to claim 1, wherein the engaging members are adapted such that they follow linear paths upon conveying panels.

3. An apparatus according to claim 1 or 2, wherein the engaging members are mounted to a common frame, which is movable reciprocatingly with respect to the feeding station, machining station, inserting station and discharge station.

4. An apparatus according to one of the preceding claims, wherein at least one of the engaging members comprises opposite holding surfaces for holding therebetween a panel which holding surfaces are displaceable with respect to each other so as to be able to hold panels of different dimensions.

5. An apparatus according to one of the preceding claims, wherein the apparatus has an upright orientation, in a top down sequence of the feeding station, the machining station, the inserting station and the discharge station.

6. An apparatus according to claim 5, wherein the feeding station is adapted to receive a stack of laying panels.

7. An apparatus according to claim 6, wherein the engaging members are movable in horizontal direction so as to engage a side edge of a panel.

8. A method of assembling panels and locking elements, comprising the subsequent steps of
simultaneously machining a recess into a first panel at a machining station and inserting a locking element into a recess of a second panel at an inserting station,
simultaneously supplying a third panel to the machining station, conveying the first panel from the machining station to the inserting station and conveying the second panel from the inserting station to a discharge station for discharging the assembled second panel,
simultaneously machining a recess into the third panel at the machining station and inserting a locking element into the recess of the first panel at the inserting station.

9. An apparatus for treating panels, comprising
a feeding conveyor for substantially continuously supplying a panel,
a processing assembly including a magazine for receiving the continuously supplied panels, the processing assembly being provided with an indexing system for taking the panels from or by the magazine in a substantially discontinuous manner to a plurality of processing stations, including
a treatment station for treating the panel,
a discharge station for discharging the treated panel.

10. An apparatus according to claim 9, wherein the apparatus is suitable for assembling panels and locking elements, wherein the treatment station comprises a machining station for making a recess into a panel, and the processing stations further include an inserting station for inserting a locking element into a recess of a panel, wherein the discharge station is suitable for discharging the assembled panel.

11. An apparatus according to claim 10, wherein the processing assembly comprises:
at least three movable engaging members, wherein each engaging member is suitable for engaging and conveying a panel, which engaging members are adapted such that
a first panel can be engaged at the feeding station, conveyed from the feeding station to the machining station and disengaged at the machining station,
a second panel can be engaged at the machining station, conveyed from the machining station to the inserting station and disengaged at the inserting station, and
a third panel can be engaged at the inserting station, conveyed from the inserting station to the discharge station and disengaged at the discharge station
simultaneously.

12. An apparatus according to claim 11, wherein the engaging members comprise pairs of jaws facing each other and movable to and from each other so as to be able to engage and disengage a panel between said pair of jaws.

13. An apparatus according to claim 11 or 12, wherein the processing assembly comprises processing station support members for holding panels at the processing stations during a period between disengaging and engaging panels by the engaging members.

14. A method of assembling panels and locking elements, comprising the steps of:
supplying panels in a substantially continuous manner to a magazine for temporarily taking up the panels,
feeding the panels from or by the magazine in a discontinuous manner to subsequent processing stations where the panels are machined and supplied with locking elements and discharged to a discharge conveyor.

15. A method according to claim 14, comprising the steps of:
simultaneously machining a recess into a first panel at a machining station and inserting a locking element into a recess of a second panel at an inserting station,
simultaneously supplying a third panel to the machining station, conveying the first panel from the machining station to the inserting station and conveying the second panel from the inserting station to a discharge station for discharging the assembled second panel,
simultaneously machining a recess into the third panel at the machining station and inserting a locking element into the recess of the first panel at the inserting station.
